# EUROPEAN PATENT APPLICATION

(11) **EP 4 227 784 A1**
(43) Date of publication of application: **16.08.2023**
(21) Application number: 21891081.8
(22) Date of filing: 08.11.2021
(51) Int. Cl.: G06F 3/0481

(54) **NOTIFICATION MESSAGE MANAGEMENT METHOD AND ELECTRONIC DEVICE**

(30) Priority: 11.11.2020 CN 202011257002
(71) Applicant: Huawei Technologies Co., Ltd., Shenzhen, Guangdong 518129 (CN)
(72) Inventor: HU, Yue, Shenzhen, Guangdong 518129 (CN); WANG, Hongjun, Shenzhen, Guangdong 518129 (CN); LIN, Chen, Shenzhen, Guangdong 518129 (CN)
(74) Representative: MERH-IP Matias Erny Reichl Hoffmann Patentanwälte PartG mbB
(86) International application number: PCT/CN2021/129387
(87) International publication number: WO 2022/100556

(57) **Abstract**

This application provides a notification message management method and an electronic device, and relates to the field of terminal technologies, to provide a user with a function of quickly searching for and managing a notification message in a notification bar, thereby improving management efficiency and use experience of the user on the notification message in the notification bar. The method includes: An electronic device displays a notification interface, where the notification interface includes N (where N is an integer greater than 1) notification messages of M (where M is an integer greater than or equal to 1) applications, and these notification messages are usually not read by a user. The notification interface further includes an operation bar, and identifiers of the M applications are displayed in the operation bar.

## Description

This application claims priority to Chinese Patent Application No. 202011257002.0, filed with the China National Intellectual Property Administration on November 11, 2020 and entitled "NOTIFICATION MESSAGE MANAGEMENT METHOD AND ELECTRONIC DEVICE", which is incorporated herein by reference in its entirety.

### TECHNICAL FIELD

This application relates to the field of terminal technologies, and in particular, to a notification message management method and an electronic device.

### BACKGROUND

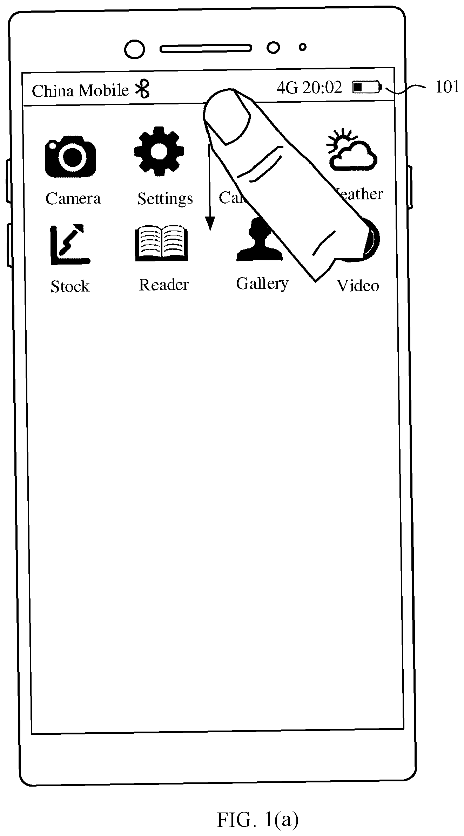

Currently, a notification bar (which is also referred to as a notification panel) is set in an electronic device such as a mobile phone, to display notification messages that are received by an operating system or applications. A mobile phone is used as an example. As shown in FIG. 1(a), the mobile phone may display a status bar (status bar) 101 when displaying an application such as a home screen. Time, a battery level, signal strength, a Bluetooth status, an operator name, and the like may be displayed in the status bar 101.

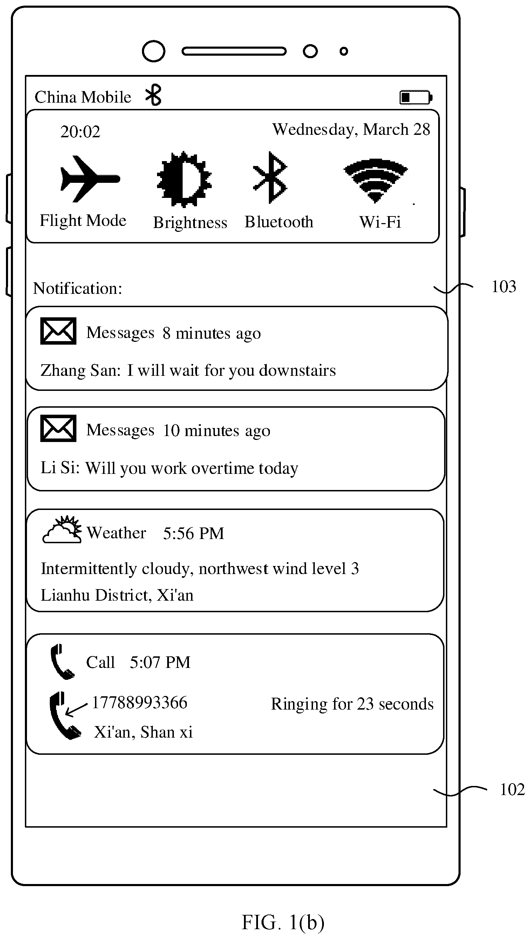

If the mobile phone detects that a user drops down the status bar 101, as shown in FIG. 1(b), the mobile phone may display a drop-down menu 102. When there are notification messages of applications in the mobile phone, the mobile phone may display the notification messages in a notification bar 103 of the drop-down menu 102. The mobile phone may display the received notification messages one by one in the notification bar 103 in a form of a notification message or a notification message group (the notification message group includes a plurality of notification messages).

However, when there are a relatively large quantity of notification messages (or notification message groups), the user needs to slide up and down in the notification bar 103 to locate a corresponding notification message (or notification message group). Consequently, the user has relatively poor use experience when browsing and managing the notification messages.

### SUMMARY

This application provides a notification message management method and an electronic device, to provide a user with a function of quickly searching for and managing a notification message in a notification bar, and improve management efficiency and use experience of the user on the notification message in the notification bar.

To achieve the foregoing objective, this application uses the following technical solutions.

According to a first aspect, this application provides a notification message management method, including: An electronic device displays a notification interface, where the notification interface includes N (N is an integer greater than 1) notification messages of M (M is an integer greater than or equal to 1) applications, and these notification messages are usually not read by a user; and the notification interface further includes an operation bar, and identifiers of the M applications are displayed in the operation bar.

In other words, in this application, an operation bar is additionally set in the notification interface, and an identifier of an application corresponding to each current notification message is displayed in the operation bar. In this way, a user can quickly browse, in the operation bar of the notification interface, specific applications to which the current notification messages belong. Subsequently, the user may input a corresponding operation for the identifier of the application in the operation bar, to trigger the electronic device to manage the notification message by using an application as a granularity, so as to improve management efficiency and use experience of the user on the notification message in the notification bar.

In a possible implementation, the identifiers of the M applications include an identifier of a first application (for example, an icon of the first application), and after the electronic device displays the notification interface, the method further includes: The electronic device receives a first filtering operation input by the user for the identifier of the first application; and in response to the first filtering operation, the electronic device displays, in the notification interface, a notification message of the first application in the N notification messages. In this case, a notification message of another application may not be displayed in the notification interface.

In this way, the user may select an identifier of an application in the operation bar, to filter out a notification message of the application in the notification interface, so that the user can quickly find the notification message of the application by using an application as a granularity, thereby improving management efficiency and use experience of the user on the notification message.

In a possible implementation, after the electronic device receives the first filtering operation input by the user for the identifier of the first application, the method further includes: In response to the first filtering operation, the electronic device marks the identifier of the first application in the operation bar as a selected state, to notify the user that the identifier of the first application is currently selected, and a filtering result of the notification message of the first application is presented on the notification interface.

In a possible implementation, the identifiers of the M applications further include an identifier of a second application, and after the electronic device displays, in the notification interface, the notification message of the first application in the N notification messages, the method further includes: The electronic device receives a second filtering operation input by the user for the identifier of the second application; and in response to the second filtering operation, the electronic device may display, in the notification interface, a notification message of the second application in the N notification messages.

In other words, after the electronic device filters out the notification message of the first application in the notification interface, if the user continues to filter the notification message of the second application, the electronic device may no longer filter the notification message of the first application, but filter the notification message of the second application from all notification messages again.

In a possible implementation, after the electronic device displays, in the notification interface, the notification message of the second application in the N notification messages, the method further includes: The electronic device receives a first filtering cancellation operation input by the user for the identifier of the second application; and in response to the first filtering cancellation operation, the electronic device displays the N notification messages in the notification interface.

In other words, when the user inputs the first filtering cancellation operation for the identifier of the second application, the electronic device may display all of the notification messages in the notification interface again.

Alternatively, when the identifiers of the M applications further include the identifier of the second application, the electronic device may further receive a second filtering operation input by the user for the identifier of the second application; and in response to the second filtering operation, the electronic device may display, in the notification interface, the notification messages of the first application and the second application in the N notification messages

In other words, after the electronic device filters out the notification message of the first application in the notification interface, if the user continues to filter out the notification message of the second application, the electronic device may simultaneously filter out the notification messages of the first application and the second application from all of the notification messages, and present the notification messages of the first application and the second application to the user in the notification interface.

In a possible implementation, after the electronic device displays, in the notification interface, the notification messages of the first application and the second application in the N notification messages, the method further includes: The electronic device may receive a first filtering cancellation operation input by the user for the identifier of the second application; and in response to the first filtering cancellation operation, the electronic device displays, in the notification interface, the notification message of the first application in the N notification messages.

After the electronic device filters out the notification messages of the first application and the second application in the notification interface, if the user inputs the first filtering cancellation for the identifier of the second application, the electronic device may cancel the filtering operation on the notification message of the second application, and retain a filtering result of the notification message of the first application in the notification interface.

Further, after the electronic device displays, in the notification interface, the notification message of the first application in the N notification messages, the method further includes: The electronic device may receive a second filtering cancellation operation input by the user for the identifier of the first application; and in response to the second filtering cancellation operation, the electronic device may display the N notification messages in the notification interface.

That is, after the user cancels a filtering operation on notification messages of all applications, the electronic device may cancel the filtering operation on the notification message of the second application.

In a possible implementation, the identifiers of the M applications include an identifier of a first application, and after the electronic device displays the notification interface, the method further includes: The electronic device receives a first pinning operation input by the user for the identifier of the first application, for example, an operation of dragging the identifier of the first application to slide downwards; and in response to the first pinning operation, the electronic device may display a notification message of the first application in the N notification messages on the top in the notification interface.

In other words, the user may trigger, by operating an identifier of an application in the operation bar, the electronic device to display all notification messages of a corresponding application on the top in the notification interface, so that the user can quickly find a notification message of an application by using an application as a granularity, thereby improving management efficiency and use experience of the user on the notification message.

In a possible implementation, after the electronic device receives the first pinning operation input by the user for the identifier of the first application, the method further includes: In response to the first pinning operation, the electronic device displays a pinning icon around the identifier of the first application, to notify the user that the current notification message of the first application is displayed on the top.

In a possible implementation, after the electronic device receives the first pinning operation input by the user for the identifier of the first application, the method further includes: The electronic device obtains a first notification message; when the first notification message is a notification message of the first application, the electronic device may display the first notification message on the top in the notification interface; or when the first notification message is a notification message of another application other than the first application, the electronic device may display the first notification message after the notification message of the first application. In other words, when a notification message of an application is displayed on the top, a new notification message received by the application is also displayed on the top.

In a possible implementation, the identifiers of the M applications further include an identifier of a second application, and after the electronic device displays the notification message of the first application in the N notification messages on the top in the notification interface, the method further includes: The electronic device receives a second pinning operation (the second pinning operation may be the same as the first pinning operation) input by the user for the identifier of the second application; and in response to the second pinning operation, the electronic device may display a notification message of the second application in the N notification messages on the top in the notification interface. In this way, the electronic device may display each notification message of an application on the top in response to the pinning operation performed by the user on the application identifier in the operation bar. Alternatively, in response to the second pinning operation, the electronic device may display, on the top in the notification interface, the notification messages of the first application and the second application in the N notification messages. In this way, the electronic device may simultaneously display notification messages of a plurality of applications on the top in the notification interface.

In a possible implementation, after the electronic device displays the notification message of the first application in the N notification messages on the top in the notification interface, the method further includes: The electronic device receives an unpinning operation input by the user for the identifier of the first application; and in response to the unpinning operation, the electronic device may restore a display location of the notification message of the first application in the notification interface, that is, the user may cancel a pinning function of the notification message of the first application by using an application as a granularity.

In a possible implementation, after the electronic device displays the notification message of the first application in the N notification messages on the top in the notification interface, the method further includes: The electronic device receives an unpinning operation input by the user for a second notification message, where the second notification message is a notification message that is of the first application and that is displayed on the top; and in response to the unpinning operation, the electronic device may restore a display location of the second notification message in the notification interface, that is, the user may cancel a pinning function of a notification message by using a notification message as a granularity.

After the electronic device cancels a pinning function of a notification message, a pinning function of an application to which the notification message belongs is not affected. Subsequently, if the electronic device receives a notification message of the first application again, the electronic device may further display the notification message of the first application on the top of the notification interface.

In a possible implementation, the method further includes: When the electronic device does not obtain a notification message of a third application, the electronic device may set the third application as a pinned application in response to a related setting operation of the user. In this way, after the electronic device displays the notification interface, if the electronic device obtains the notification message of the third application, the electronic device may display the notification message of the third application on the top in the notification interface, and display an identifier of the third application in the operation bar. In other words, before the notification message of the third application is received, the user may preset that the notification message of the third application needs to be displayed on the top. In this way, after receiving the notification message of the third application, the electronic device may directly display the notification message of the third application on the top in the notification interface.

In a possible implementation, the identifiers of the M applications include an identifier of a first application, and after the electronic device displays the notification interface, the method further includes: The electronic device receives a deletion operation input by the user for the identifier of the first application, for example, an operation of dragging the identifier of the first application to slide upwards; and in response to the deletion operation, the electronic device may delete a notification message of the first application in the notification interface.

In this way, the user may delete, in the notification interface, notification messages of an application in batches by operating an identifier of the application in the operation bar, so that the user manages notification messages in the notification interface by using an application as a granularity, thereby improving user experience.

In a possible implementation, the operation bar may further include a first button used to display all notification messages. If a first operation (for example, a tap operation) input by the user on the first button is detected, the electronic device may display the N notification messages in the notification interface.

In a possible implementation, the operation bar may further include a second button used to delete all notification messages. If a second operation (for example, a tap operation) input by the user on the second button is detected, the electronic device may delete all notification messages (namely, the N notification messages) in the notification interface.

In a possible implementation, a badge is set on each of the identifiers of the M applications, and the badge is used to indicate a quantity of notification messages currently received by a corresponding application.

In addition, when the electronic device displays the identifiers of the applications in the operation bar, the electronic device may sort the identifiers of the applications based on a receiving time point at which each application receives a notification message last time; or the electronic device may sort the identifiers of the applications based on a parameter such as a use frequency or use duration of each application by the user. This is not limited in this application.

According to a second aspect, this application provides an electronic device, including: a touchscreen, one or more processors, one or more memories, and one or more computer programs. The processor is coupled to both the touchscreen and the memory, the one or more computer programs are stored in the memory, and when the electronic device runs, the processor executes the one or more computer programs stored in the memory, so that the electronic device performs the notification message management method according to any one of the foregoing implementations.

According to a third aspect, this application provides a computer storage medium, including computer instructions. When the computer instructions are run on an electronic device, the electronic device is enabled to perform the notification message management method according to any one of the implementations of the first aspect.

According to a fourth aspect, this application provides a computer program product. When the computer program product runs on an electronic device, the electronic device is enabled to perform the notification message management method according to any one of the implementations of the first aspect.

It may be understood that, the electronic device in the second aspect, the computer storage medium in the third aspect, and the computer program product in the fourth aspect are all configured to perform the corresponding method. Therefore, for beneficial effects that can be achieved by the electronic device, the computer storage medium, and the computer program product, refer to beneficial effects in the corresponding method. Details are not described again herein.

### BRIEF DESCRIPTION OF DRAWINGS

FIG. 1(a) and FIG. 1(b) are an application scenario of opening a notification bar in the conventional technology;
FIG. 2 is a schematic diagram 1 of a structure of an electronic device according to an embodiment of this application;
FIG. 3 is a schematic diagram of an architecture of an operating system of an electronic device according to an embodiment of this application;
FIG. 4 is a schematic diagram 1 of an application scenario of a notification message management method according to an embodiment of this application;
FIG. 5 is a schematic diagram 2 of an application scenario of a notification message management method according to an embodiment of this application;
FIG. 6 is a schematic diagram 3 of an application scenario of a notification message management method according to an embodiment of this application;
FIG. 7 is a schematic diagram 4 of an application scenario of a notification message management method according to an embodiment of this application;
FIG. 8 is a schematic diagram 5 of an application scenario of a notification message management method according to an embodiment of this application;
FIG. 9 is a schematic diagram 6 of an application scenario of a notification message management method according to an embodiment of this application;
FIG. 10(a) and FIG. 10(b) are a schematic diagram 7 of an application scenario of a notification message management method according to an embodiment of this application;
FIG. 11(a) and FIG. 11(b) are a schematic diagram 8 of an application scenario of a notification message management method according to an embodiment of this application;
FIG. 12 is a schematic diagram 9 of an application scenario of a notification message management method according to an embodiment of this application;
FIG. 13 is a schematic diagram 10 of an application scenario of a notification message management method according to an embodiment of this application;
FIG. 14 is a schematic diagram 11 of an application scenario of a notification message management method according to an embodiment of this application;
FIG. 15 is a schematic diagram 12 of an application scenario of a notification message management method according to an embodiment of this application;
FIG. 16 is a schematic diagram 13 of an application scenario of a notification message management method according to an embodiment of this application;
FIG. 17(a), FIG. 17(b), and FIG. 17(c) are a schematic diagram 14 of an application scenario of a notification message management method according to an embodiment of this application;
FIG. 18 is a schematic diagram 15 of an application scenario of a notification message management method according to an embodiment of this application;
FIG. 19 is a schematic diagram 16 of an application scenario of a notification message management method according to an embodiment of this application;
FIG. 20 is a schematic diagram 17 of an application scenario of a notification message management method according to an embodiment of this application;
FIG. 21 is a schematic diagram 18 of an application scenario of a notification message management method according to an embodiment of this application;
FIG. 22 is a schematic diagram 19 of an application scenario of a notification message management method according to an embodiment of this application;
FIG. 23(a), FIG. 23(b), and FIG. 23(c) are a schematic diagram 20 of an application scenario of a notification message management method according to an embodiment of this application;
FIG. 24 is a schematic diagram 21 of an application scenario of a notification message management method according to an embodiment of this application;
FIG. 25 is a schematic diagram 22 of an application scenario of a notification message management method according to an embodiment of this application; and
FIG. 26 is a schematic diagram 2 of a structure of an electronic device according to an embodiment of this application.

### DESCRIPTION OF EMBODIMENTS

The following describes implementations of embodiments in detail with reference to the accompanying drawings.

A notification message management method provided in embodiments of this application may be applied to an electronic device such as a mobile phone, a tablet computer, a notebook computer, an ultra-mobile personal computer (ultra-mobile personal computer, UMPC), a handheld computer, a netbook, a personal digital assistant (personal digital assistant, PDA), a wearable electronic device, or a virtual reality device. This is not limited in embodiments of this application.

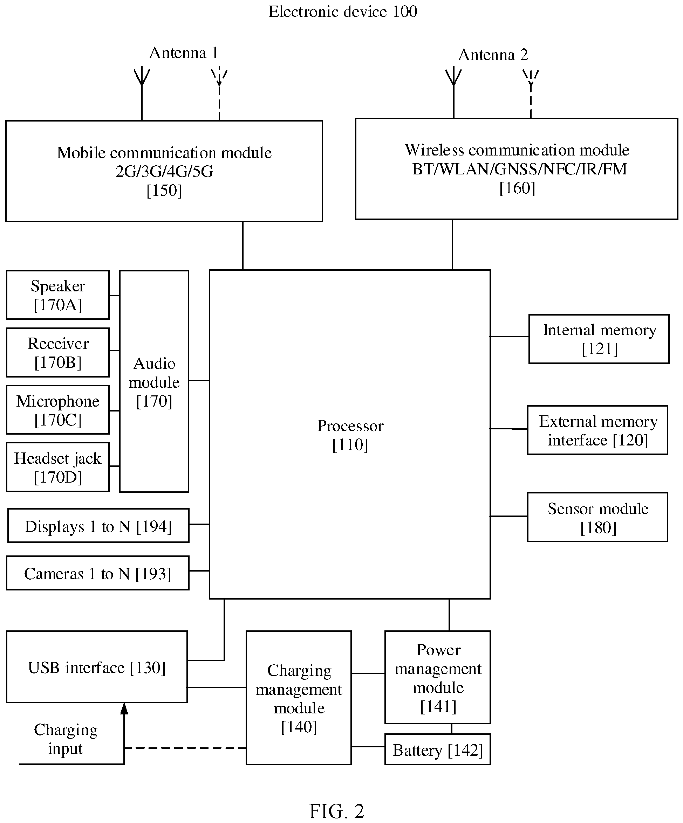

For example, FIG. 2 is a schematic diagram of a structure of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a camera 193, a display 194, and the like.

It may be understood that the structure shown in this embodiment of the present application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instruction or the data again, the processor may directly invoke the instruction or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, and/or a universal serial bus (universal serial bus, USB) interface.

The charging management module 140 is configured to receive charging input from a charger. The charger may be a wireless charger or a wired charger. In some embodiments of wired charging, the charging management module 140 may receive charging input of a wired charger through the USB interface 130. In some embodiments of wireless charging, the charging management module 140 may receive wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives input of the battery 142 and/or the charging management module 140, and supplies power to the processor 110, the internal memory 121, the display 194, the camera 193, the wireless communication module 160, and the like. The power management module 141 may be further configured to monitor a parameter such as a battery capacity, a quantity of battery cycles, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the electronic device 100. The mobile communication module 150 may include one or more filters, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert, by using the antenna 1, the signal into an electromagnetic wave for radiation. In some embodiments, at least some functional modules in the mobile communication module 150 may be disposed in the processor 110. In some embodiments, at least some function modules of the mobile communication module 150 may be disposed in a same device with at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then the demodulator transfers the low-frequency baseband signal obtained through demodulation to the baseband processor for processing. After being processed by the baseband processor, the low-frequency baseband signal is transmitted to the application processor. The application processor outputs a sound signal by using an audio device (not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same device as the mobile communication module 150 or another function module.

The wireless communication module 160 may provide a solution for wireless communication including a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like applied to the electronic device 100. The wireless communication module 160 may one or more components integrated with one or more communication processing modules. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert, by using the antenna 2, the signal into an electromagnetic wave for radiation.

In some embodiments, the antenna 1 of the electronic device 100 is coupled to the mobile communication module 150, and the antenna 2 is coupled to the wireless communication module 160, so that the electronic device 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, and the GPUs execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function by using the ISP, the camera 193, the video coder/decoder, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An object generates, through a lens, an optical image to be projected to a photosensitive element. The photosensitive element may be a charge coupled device (charge coupled device, CCD) or a complementary metal oxide semiconductor (complementary metal-oxide-semiconductor, CMOS) optoelectronic transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in a format such as RGB or YUV. In some embodiments, the electronic device 100 may include one or N cameras 193, where N is a positive integer greater than 1.

The external memory interface 120 may be used to connect to an external storage card, for example, a micro SD card, to extend a storage capability of the electronic device 100. The external memory card communicates with the processor 110 by using the external memory interface 120, to implement a data storage function. For example, a music file or a video file is stored in the external storage card.

The internal memory 121 may be configured to store one or more computer programs, and the one or more computer programs include instructions. The processor 110 may run the instructions stored in the internal memory 121, so that the electronic device 100 performs a method provided in some embodiments of this application, various functional applications, data processing, and the like. The internal memory 121 may include a program storage area and a data storage area. The program storage area may store an operating system. The program storage area may further store one or more applications (for example, Gallery and Contacts), and the like. The data storage area may store data (for example, a photo and a contact) created during use of the electronic device 101, and the like. In addition, the internal memory 121 may include a high-speed random access memory, and may further include a non-volatile memory, such as one or more disk storage components, a flash component, or a universal flash storage (universal flash storage, UFS). In some other embodiments, the processor 110 runs the instructions stored in the internal memory 121 and/or the instructions stored in the memory disposed in the processor, so that the electronic device 100 performs the method provided in the embodiments of this application, various functional applications, and data processing.

The electronic device 100 may implement an audio function by using the audio module 170, the speaker 170A, the receiver 170B, the microphone 170C, the headset jack 170D, the application processor, and the like, for example, music playing and recording.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some function modules in the audio module 170 are disposed in the processor 110.

The speaker 170A, also referred to as a "loudspeaker", is configured to convert an electrical audio signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. One or more microphones 170C may be disposed in the electronic device 100. In some other embodiments, two microphones 170C may be disposed in the electronic device 100, to collect a sound signal and further implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The sensor module 180 may include a pressure sensor, a gyroscope sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like

In addition, the electronic device may further include one or more components such as a button 190, a motor 191, an indicator 192, and a subscriber identification module (subscriber identification module, SIM) card interface 195. This is not limited in this embodiment of this application.

A layered architecture, an event-driven architecture, a micro-core architecture, a micro-service architecture, or a cloud architecture may be used for a software system of the electronic device 100. In an embodiment of this application, an Android system with a layered architecture is used as an example to describe the software structure of the electronic device 100.

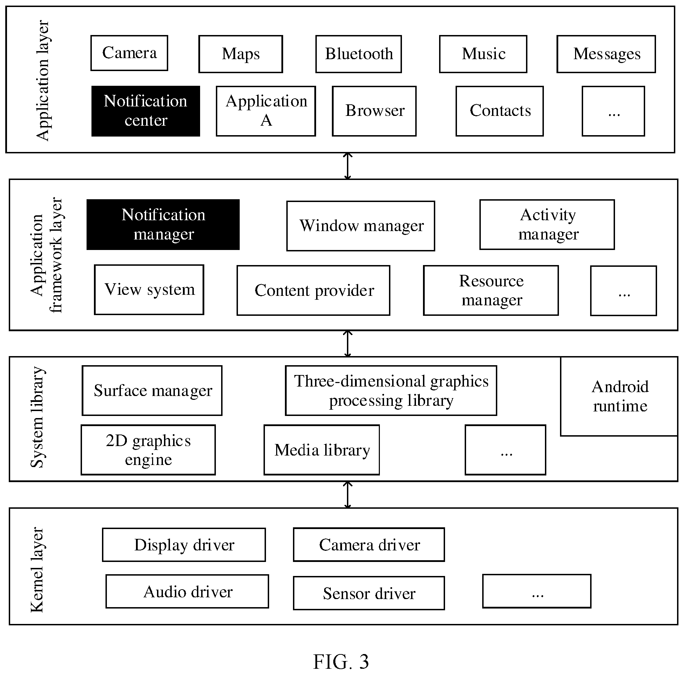

FIG. 3 is a block diagram of the software structure of the electronic device 100 according to this embodiment of this application.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

### 1. Application layer

The application layer may include a series of applications.

As shown in FIG. 3, the applications may be applications (application, app) such as "Phone", "Contacts", "Camera", "Gallery", "Calendar", "Maps", "Navigation", "Bluetooth", "Music", "Videos", and "Messages".

In this embodiment of this application, the application may further include a notification center app. If a notification message received by another application is not read by a user, the application may send the notification message to the notification center app, and the notification center app displays the received notification message in a notification bar (which may also be referred to as a notification panel). An interface in which the notification bar is located may be referred to as a notification interface. For example, the notification interface may be an interface in which a drop-down menu is located, or the notification interface may be a home screen, a leftmost screen, a lock screen interface, an application interface of an application, or the like.

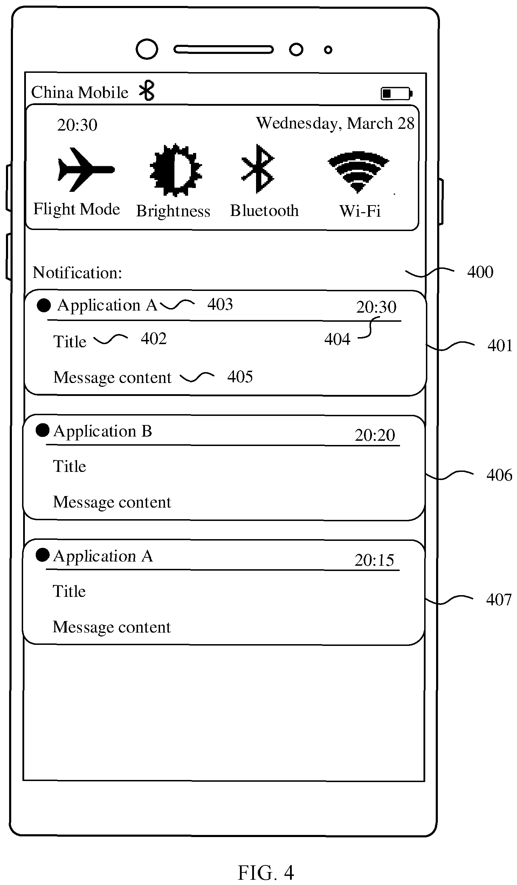

As shown in FIG. 4, after receiving a notification message 401 from an application A, the notification center app may display the notification message 401 in a form of a card or the like in a notification bar 400. The notification message 401 may include controls such as a title 402, an identifier 403 of the application A, a receiving time point 404, and message content 405. A person skilled in the art may set controls in a notification message (for example, the notification message 401) based on an actual application scenario or actual experience.

Certainly, the notification message in the notification bar 400 may be a notification message from an application, or may be a notification message (for example, a version upgrade message) from an operating system, or may be a notification message from an FA (Feature Ability, FA) or a PA (Particle Ability). This is not limited in this embodiment of this application.

### 2. Application framework layer

The application framework layer provides an application programming interface (application programming interface, API) and a programming framework for the applications at the application layer. The application framework layer includes some predefined functions.

Still as shown in FIG. 3, the application framework layer may include a notification manager (notification manager). For example, after receiving the notification message 401, the application A may first instantiate a corresponding notification object (that is, a notification object, which may also be referred to as a structure). For example, the notification object may include information such as the title 402, the identifier 403 of the application A, the receiving time point 404, and the message content 405, and one or more pieces of the information may be used as content that needs to be displayed in the notification message 401. Then, the application A may invoke a related interface (for example, a notify() interface) of the notification manager to transfer the created notification object as a parameter to the notification manager.

For example, the notification manager stores, in a preset database 1, a notification object sent by each application. For example, as shown in Table 1, the notification manager stores, in the database 1, two notification objects from the application A and one notification object from an application B. Each notification object corresponds to one notification message. For example, a notification object 1 corresponds to the notification message 401, a notification object 2 corresponds to a notification message 406, and a notification object 3 corresponds to a notification message 407.

After obtaining the notification object 1 sent by the application A, the notification manager may add the notification object 1 to the database 1 shown in Table 1. Further, as shown in FIG. 4, the notification manager may indicate the notification center app to draw the corresponding notification message 401, notification message 406, and notification message 407 in the notification bar 400 based on each notification object shown in Table 1. In this way, each time an application receives a new notification message, notification messages displayed in the notification bar 400 may be updated according to the foregoing method.

**Table 1**

| Notification object | Application | Receiving time point | Title | Message content |
|---|---|---|---|---|
| Notification object 1 | Identifier of an application A | Time point 1 | Title 1 | Content 1 |
| Notification object 2 | Identifier of an application B | Time point 2 | Title 2 | Content 2 |
| Notification object 3 | Identifier of the application A | Time point 3 | Title 3 | Content 3 |
| ... | ... | ... | ... | ... |

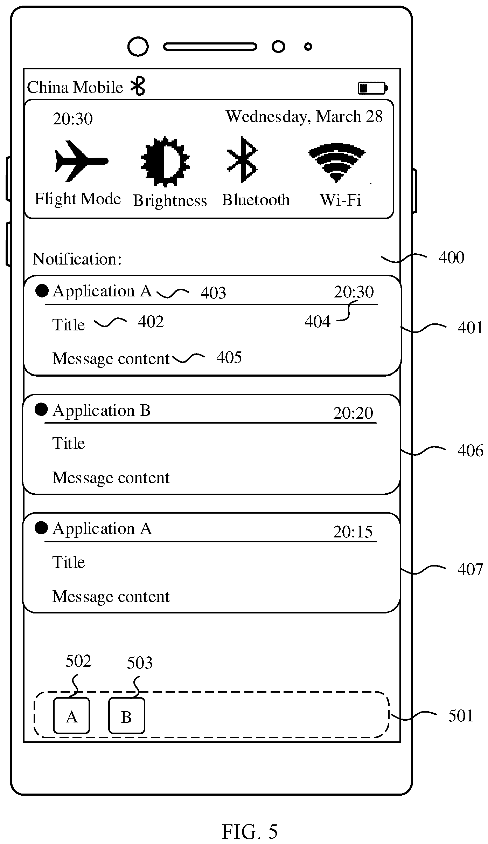

In this embodiment of this application, as shown in FIG. 5, the notification center app may further set an operation bar 501 in the notification bar 400. The operation bar 501 displays an identifier of an application that currently has a notification message. For example, when three notification messages in the notification bar 400 are from the application A and the application B, the operation bar 501 may include an identifier 502 of the application A and an identifier 503 of the application B. Subsequently, the user may operate the identifier 502 of the application A to uniformly manage one or more notification messages from the application A in the notification bar 400. Alternatively, the user may operate the identifier 503 of the application B to uniformly manage one or more notification messages from the application B in the notification bar 400.

For example, if the notification center app detects that the user inputs a first operation on the identifier 502 of the application A in the operation bar 501, the notification center app may send a deletion instruction to the notification manager, where the deletion instruction is used to delete a notification message from the application A in the notification bar 400. In response to the deletion instruction, the notification manager may delete all notification objects corresponding to the application A in Table 1. Further, the notification manager may indicate the notification center app to redraw each notification message in the notification bar 400 based on an updated Table 1. Because no notification object of the application A exists in the updated Table 1, the notification message finally drawn by the notification center app in the notification bar 400 based on the updated Table 1 does not include a notification message of the application A. This implements a function of deleting notification messages in batches at a granularity of application.

Certainly, the user may further input another operation on the identifier 502 of the application A (or the identifier 503 of the application B) in the operation bar 501, to implement functions such as filtering and pinning a notification message of an application. This is described in detail in a subsequent embodiment, and therefore details are not described herein.

It can be learned that in this embodiment of this application, the operation bar 501 is set in the notification bar 400, so that an identifier of an application that currently has a notification message may be displayed in the operation bar 501. The user may quickly and conveniently manage, by using an application as a granularity, all notification messages of an application by operating an identifier of the corresponding application in the operation bar 501, so that the user does not need to search for each notification message in the notification bar 400 and manage the notification message. This improves management efficiency and use experience of the user on the notification message in the notification bar 400.

Certainly, the application framework layer may further include an activity manager, a window manager, a content provider, a view system, a resource manager, an input method manager, and the like.

The activity manager can be configured to manage a life cycle of each application. The application usually runs in an operating system in a form of an activity. The activity manager may schedule an activity process of the application to manage the life cycle of each application. The window manager is configured to manage a window program. The window manager may obtain a size of a display, determine whether there is a status bar, perform screen locking, take a screenshot, and the like. The content provider is configured to: store and obtain data, and enable the data to be accessed by an application. The data may include a video, an image, audio, calls that are made and answered, a browsing history and bookmarks, an address book, and the like. The view system includes visual controls such as a control for displaying a text and a control for displaying an image. The view system may be configured to construct an application. A display interface may include one or more views. For example, a display interface including an SMS message notification icon may include a text display view and an image display view. The resource manager provides various resources such as a localized string, an icon, an image, a layout file, and a video file for an application.

### 3. Android runtime and system library

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer are run on the virtual machine. The virtual machine executes Java files at the application layer and the application framework layer as binary files. The virtual machine is configured to implement functions such as object life cycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem, and provide fusion of 2D and 3D layers for a plurality of applications. The media library supports playback and recording in a plurality of commonly used audio and video formats, static image files, and the like. The media library may support a plurality of audio and video encoding formats such as MPEG-4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

### 4. Kernel layer

The kernel layer is a layer between hardware and software. The kernel layer includes at least a display driver, a camera driver, an audio driver, a sensor driver, and the like. This is not limited in this embodiment of this application.

The following describes in detail the notification message management method provided in embodiments of this application with reference to the accompanying drawings by using an example in which a mobile phone is the electronic device.

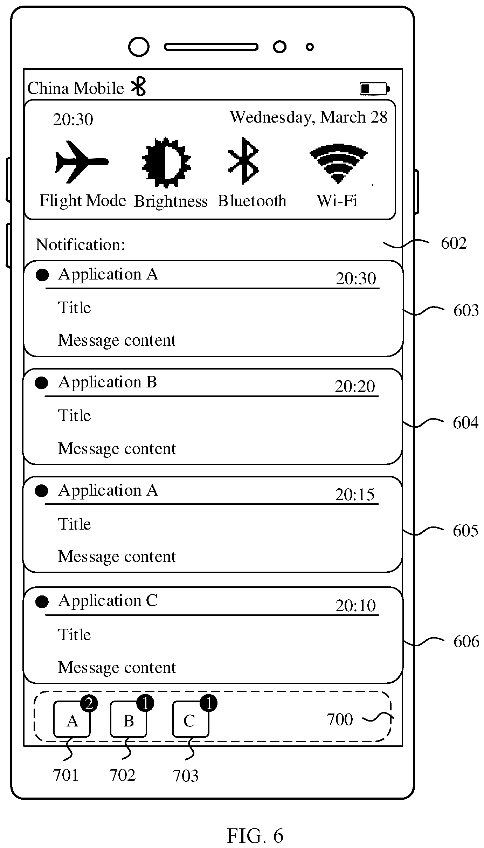

For example, a notification center app (which may also be referred to as a notification app) may be installed at an application layer of the mobile phone. As shown in FIG. 6, the notification center app may display a notification bar 602 in a drop-down menu 601. The notification bar 602 includes notification messages received by applications. For example, the notification center app may display each notification message in the notification bar 602 in a form of a card based on a time sequence of receiving the notification messages by the applications. For example, the notification bar 602 shown in FIG. 6 includes a notification message 603, a notification message 604, a notification message 605, and a notification message 606. The notification message 603 and the notification message 605 are from an application A, the notification message 604 is from an application B, and the notification message 606 is from an application C. Each notification message may include controls such as an application identifier (for example, an application name or an application icon), a title of the notification message, a receiving time point, or message content. This is not limited in this embodiment of this application.

Certainly, the notification bar 602 may further display more notification messages. When there are too many notification messages that cannot be all displayed in the notification bar 602, the notification center app may hide some notification messages in the notification bar 602, and the user may trigger, by inputting a sliding operation, the notification center app to display the hidden notification messages in the notification bar 602.

In some embodiments, still as shown in FIG. 6, an operation bar 700 is further set in the notification bar 602. The operation bar 700 displays an identifier of an application that currently has a notification message. For example, the operation bar 600 displays an identifier 701 of the application A, an identifier 702 of the application B, and an identifier 703 of the application C. In some embodiments, a badge may be set on an identifier of each application in the operation bar 700, and a number in the badge is used to indicate a quantity of notification messages that the corresponding application currently has. For example, a number in a badge of the identifier 701 of the application A is 2, and a number in a badge of the identifier 702 of the application B and a number in a badge of the identifier 703 of the application C are both 1. In other words, in this case, in the notification bar 602, there are two notification messages from the application A, one notification message from the application B, and one notification message from the application C. In this way, a user may quickly browse, in the operation bar 700, current applications to which the notification message belongs in the notification bar 602 and a quantity of notification messages received by each application.

For example, when displaying the identifiers of the applications in the operation bar 700, the notification center app may sort the identifiers of the applications based on a receiving time point at which each application receives a notification message last time. For example, a receiving time point T1 at which the application A receives the notification message 603 last time is later than a receiving time point T2 at which the application B receives the notification message 604 last time, and the receiving time point T2 at which the application B receives the notification message 604 last time is later than a receiving time point T3 at which the application C receives the notification message 606 last time (that is, T1>T2>T3). In this case, the notification center app may sequentially arrange the identifier 701, the identifier 702, and the identifier 703 in a sequence of the application A, the application B, and the application C.

Alternatively, when displaying the identifiers of the applications in the operation bar 700, the notification center app may sort the identifiers of the applications based on duration of using the application A, the application B, and the application C by the user. For example, the notification center app may collect statistics about the duration of using the application A, the application B, and the application C by the user in a last period (for example, 24 hours). If the use duration of the application C is greater than the use duration of the application B, and the use duration of the application B is greater than the use duration of the application A, the notification center app may sequentially arrange the identifier 701, the identifier 702, and the identifier 703 in a sequence of the application C, the application B, and the application A.

Similarly, when displaying the identifiers of the applications in the operation bar 700, the notification center app may alternatively sort the identifiers of the applications based on frequencies of using the application A, the application B, and the application C by the user. For example, the notification center app may collect statistics about quantities of times that the user uses the application A, the application B, and the application C in a last period (for example, 24 hours). If the use duration of the application C is greater than the use duration of the application A, and the use duration of the application A is greater than the use duration of the application B, the notification center app may sequentially arrange the identifier 701, the identifier 702, and the identifier 703 in a sequence of the application C, the application A, and the application B.

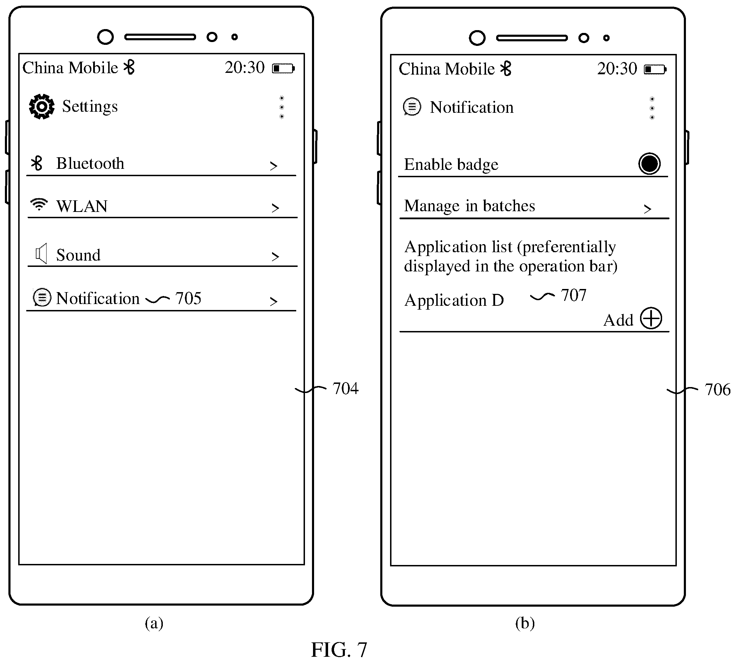

Alternatively, the user may manually set an identifier of an application that is preferentially displayed in the operation bar 700. As shown in (a) in FIG. 7, the user may open an application interface 704 of a setting app, and the application interface 704 includes an option 705 of the notification center app. If it is detected that the user taps the option 705, as shown in (b) in FIG. 7, the mobile phone may display a setting interface 706 of the notification center app. In the setting interface 706, the user may set a list 706 of applications that are preferentially displayed in the operation bar 700. For example, the application list 707 includes an application D. After the mobile phone receives a notification message from the application D, the notification center app may display an identifier of the application D at the top of the operation bar 700.

In addition, after the notification center app displays identifiers of a plurality of applications in the operation bar 700, the user may also manually change a sequence relationship between the identifiers of the applications. For example, in the notification bar 602 shown in FIG. 6, the user may drag the identifier 701 of the application A to a location of the identifier 702 of the application B. After it is detected that the user releases a finger, the notification center app may exchange the locations of the identifier 701 and the identifier 702 in response to the drag operation input by the user this time, so as to change a location relationship between the identifiers of the plurality of applications in the operation bar 700.

In this embodiment of this application, the user may input a corresponding operation on an identifier of an application in the operation bar 700, to trigger the notification center app to perform a management operation such as filtering, pinning, or deleting on the notification message by using an application as a granularity, so as to improve management efficiency and use experience of the user on the notification message in the notification bar.

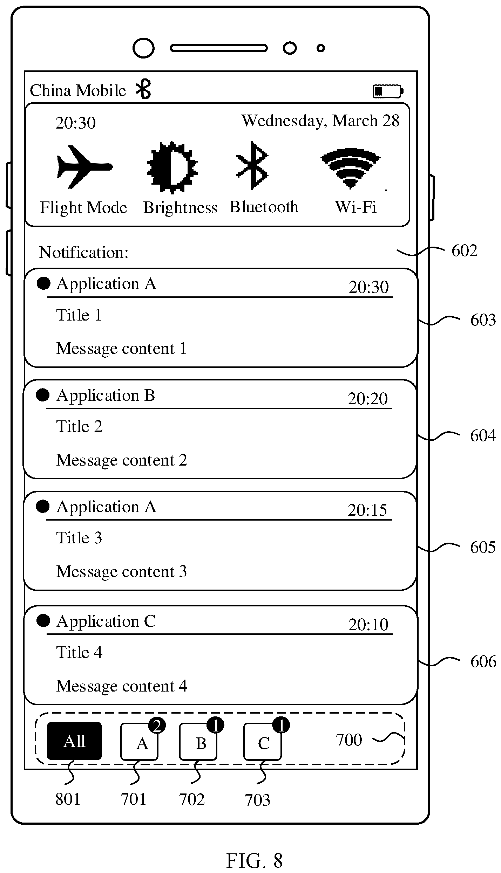

In some embodiments, as shown in FIG. 8, the notification center app may further display, in the operation bar 700, a button 801 used to display all notification messages in the notification bar 602. If it is detected that the user taps the button 801, it indicates that the user needs to display, in the notification bar 602, all notification messages currently received by the applications. In this case, the notification center app may mark the button 801 as a selected state, and display, in the notification bar 602, all of the notification messages currently received by the applications, for example, the notification message 603, the notification message 604, the notification message 605, and the notification message 606.

For example, a notification manager located at an application framework layer of the mobile phone may store, in a preset database 1, notification objects sent by applications, where each notification object corresponds to one notification message. The notification bar 602 shown in FIG. 8 is still used as an example. Refer to Table 2. In this case, the database 1 includes a notification object 1 corresponding to the notification message 603, a notification object 2 corresponding to the notification message 604, a notification object 3 corresponding to the notification message 605, and a notification object 4 corresponding to the notification message 606. The notification manager may sort the notification objects in Table 1 according to a receiving time point of each notification message. Alternatively, the notification manager may sort the notification objects in Table 1 based on different applications. This is not limited in this embodiment of this application.

**Table 2**

| Notification object | Application | Receiving time point | Title | Message content |
|---|---|---|---|---|
| Notification object 1 | Identifier of an application A | Time point 1 | Title 1 | Content 1 |
| Notification object 2 | Identifier of an application B | Time point 2 | Title 2 | Content 2 |
| Notification object 3 | Identifier of the application A | Time point 3 | Title 3 | Content 3 |
| Notification object 4 | Identifier of an application C | Time point 4 | Title 4 | Content 4 |

When it is detected that the user taps the button 801, the notification center app may send a first instruction to the notification manager, where the first instruction is used to instruct to display all of the notification messages in the notification bar 602. In this way, the notification manager may instruct, in response to the first instruction, the notification center app to draw a corresponding notification message in the notification bar 602 based on each notification object shown in Table 2 in this case, and finally display, in the notification bar 602, all of the notification messages currently received by the applications.

For example, after obtaining each notification object in Table 2, the notification center app may invoke ViewPager (a view page turning tool) to create a viewpager 1. In this way, ViewPager can draw each notification object as a control (View) in the viewpager 1. Subsequently, the notification center app may display content in the viewpager 1 in the notification bar 602, to display all of the currently received notification messages.

In some embodiments, the user may further trigger, by operating identifiers of one or more applications in the operation bar 700, the notification center app to filter the current notification message in the notification bar 602 by using an application as a granularity.

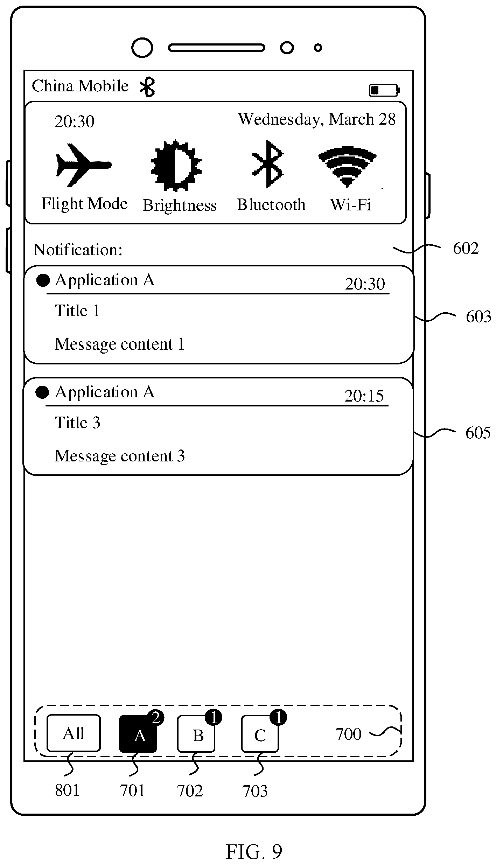

For example, still as shown in FIG. 8, the button 801 in the operation bar 700 is in a selected state. In this case, the notification center app displays, in the notification bar 602, all of the notification messages currently received by the applications. If it is detected that the user inputs a filtering operation on the identifier 701 of the application A in the operation bar 700, for example, the filtering operation may be a tap operation, it indicates that the user needs to display, in the notification bar 602, all of the notification messages currently received by the application A. In this case, as shown in FIG. 9, the notification center app may mark the identifier 701 of the application A in the operation bar 700 as a selected state, and display, in the notification bar 602, all of the notification messages currently received by the application A, for example, the notification message 603 and the notification message 605.

For example, after it is detected that the user taps the identifier 701 of the application A, the notification center app may send a second instruction to the notification manager, where the second instruction is used to instruct to display all of the notification messages of the application A in the notification bar 602. Further, in response to the second instruction, the notification manager may filter out, from the notification objects shown in Table 2, one or more notification objects corresponding to the application A, that is, the notification object 1 and the notification object 3. In this way, the notification manager may instruct the notification center app to draw, in the notification bar 602 based on the notification object 1 and the notification object 3 that are filtered out, the notification message 603 and the notification message 605 that are currently received by the application A.

For example, the notification center app may invoke ViewPager to create a viewpager 2. Further, ViewPager may draw the notification object 1 that is filtered out as a control (View) in the viewpager 2, and draw the notification object 3 that is filtered out as a control (View) in the viewpager 2. Subsequently, the notification center app may display content in the viewpager 2 in the notification bar 602, to display all of the notification messages currently received by the application A. In some embodiments, the notification center app may set a sequence of the notification message 603 and the notification message 605 in the notification bar 602 based on receiving time points of the notification message 603 and the notification message 605.

In this way, the user may select the identifier 701 of the application A in the operation bar 700, to filter out all of the notification messages of the application A in the notification bar 602, so that the user can quickly find a notification message of an application by using an application as a granularity, thereby improving management efficiency and use experience of the user on the notification message in the notification bar 602.

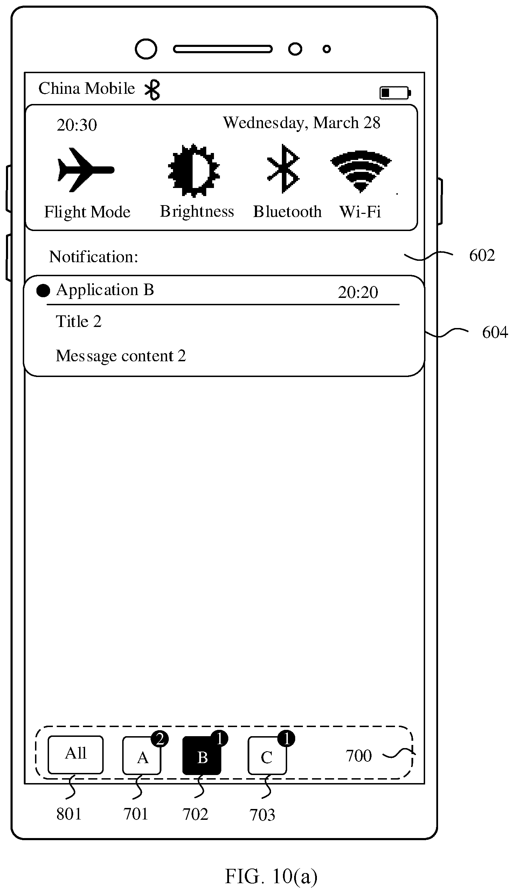

The notification bar 602 shown in FIG. 9 is still used as an example. After filtering out all of the notification messages of the application A in the notification bar 602, the user may further continue to filter out a notification message of another application. For example, if it is detected that the user taps the identifier 702 of the application B in the operation bar 700, as shown in FIG. 10(a), the notification center app may cancel selection of the identifier 701 of the application A in the operation bar 700, and mark the identifier 702 of the application B as a selected state. In this case, the notification center app may display, in the notification bar 602, all notification messages currently received by the application B, for example, the notification message 604. In other words, when it is detected that the user taps the identifier 702 of the application B in the operation bar 700, the notification center app may no longer filter the notification message of the application A, but filter the notification message of the application B from all of the notification messages from the beginning.

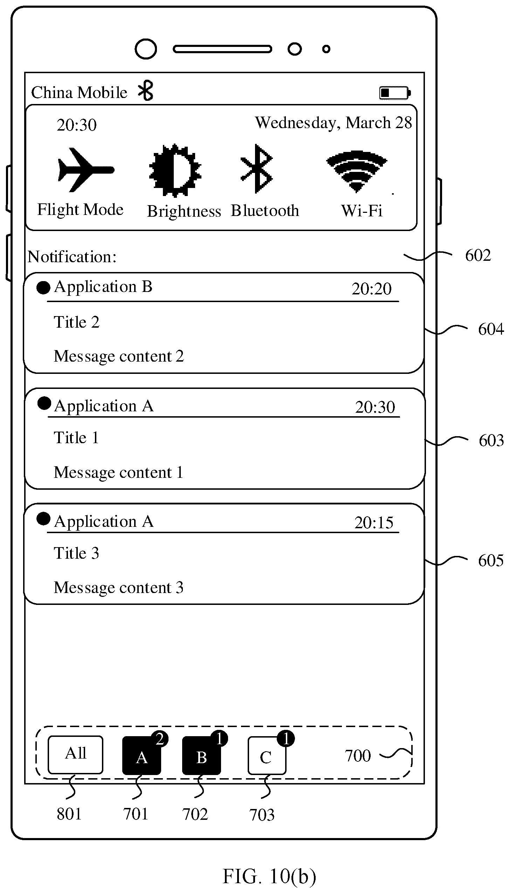

Alternatively, if it is detected that the user inputs a filtering operation on the identifier 702 of the application B in the operation bar 700, for example, taps the identifier 702 of the application B, as shown in FIG. 10(b), the notification center app may continue to mark the identifier 701 of the application A in the operation bar 700 as a selected state, and also mark the identifier 702 of the application B as a selected state. In this case, the notification center app may display, in the notification bar 602, all of the notification messages received by the current application A and the current application B. For example, the notification center app may indicate the notification manager to filter out the notification objects of the application A and the application B from all of the notification objects shown in Table 2. In this way, the notification manager may indicate the notification center app to draw the notification objects that are filtered out in the notification bar 602, so as to present, in the notification bar 602, the notification messages received by the application A and the application B. In other words, the user may tap identifiers of a plurality of applications in the operation bar 700, to trigger the notification center app to filter notification messages of the plurality of applications in the notification bar 602.

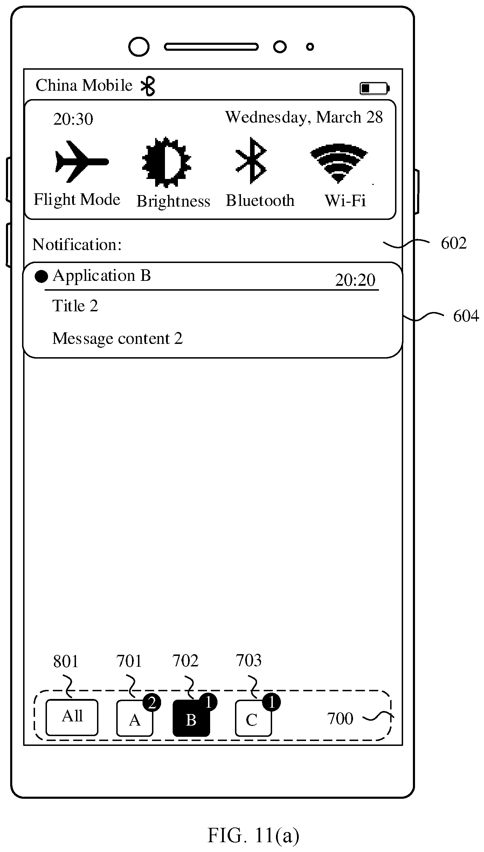

The notification bar 602 shown in FIG. 10(b) is still used as an example. After the notification center app displays, in the notification bar 602, the notification messages of the application A and the application B that are filtered out, if the user wants to cancel filtering of the notification message of the application A, the user may input a preset filtering cancellation operation on the identifier 701 of the application A in the operation bar 700. For example, if it is detected that the user taps again (that is, a filtering cancellation operation) the identifier 701 of the application A in the operation bar 700, as shown in FIG. 11 (a), the notification center app may restore the identifier 701 of the application A in the operation bar 700 to an unselected state, and delete the notification message of the application A in the notification bar 602. In this case, the identifier 702 of the application B in the operation bar 700 is still in a selected state, and only the notification message of the application B is retained in the notification bar 602.

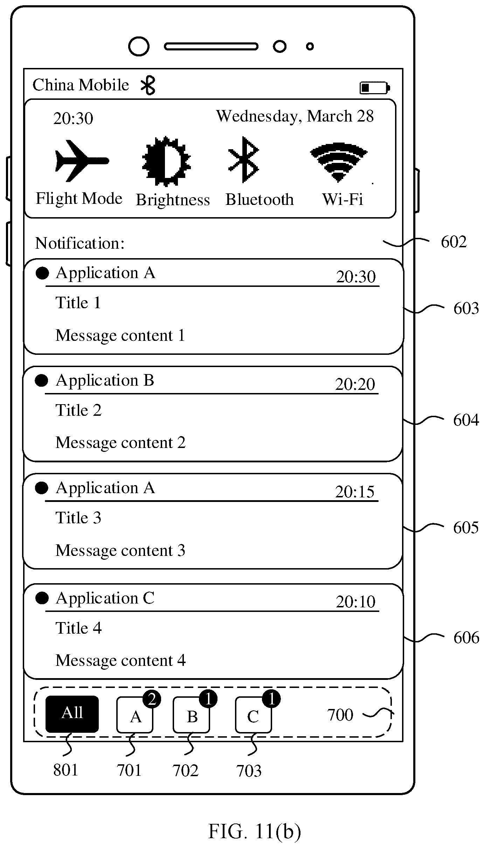

Further, if the user wants to continue to cancel filtering of the notification message of the application B in the notification bar 602, the user may further input the preset filtering cancellation operation for the identifier 702 of the application B in the operation bar 700. For example, if it is detected that the user taps again (that is, a filtering cancellation operation) the identifier 702 of the application B in the operation bar 700, as shown in FIG. 11(b), the notification center app may restore the identifier 702 of the application B in the operation bar 700 to an unselected state. In this case, because there is no selected application identifier in the operation bar 700, the notification center app may select the button 801 in the operation bar 700 by default, and display, in the notification bar 602, all notification messages currently received by the applications, such as the notification message 603, the notification message 604, the notification message 605, and the notification message 606.

It can be learned that the user may select identifiers of one or more applications in the operation bar 700, to trigger the notification center app to filter out, in the notification bar 602, corresponding notification messages of the one or more applications for the user, so that the user can quickly find a notification message of an application by using an application as a granularity, thereby improving management efficiency and use experience of the user on the notification message in the notification bar 602.

In some embodiments, the user may further trigger, by operating identifiers of one or more applications in the operation bar 700, the notification center app to display corresponding notification messages of the one or more applications on the top in the notification bar 602.

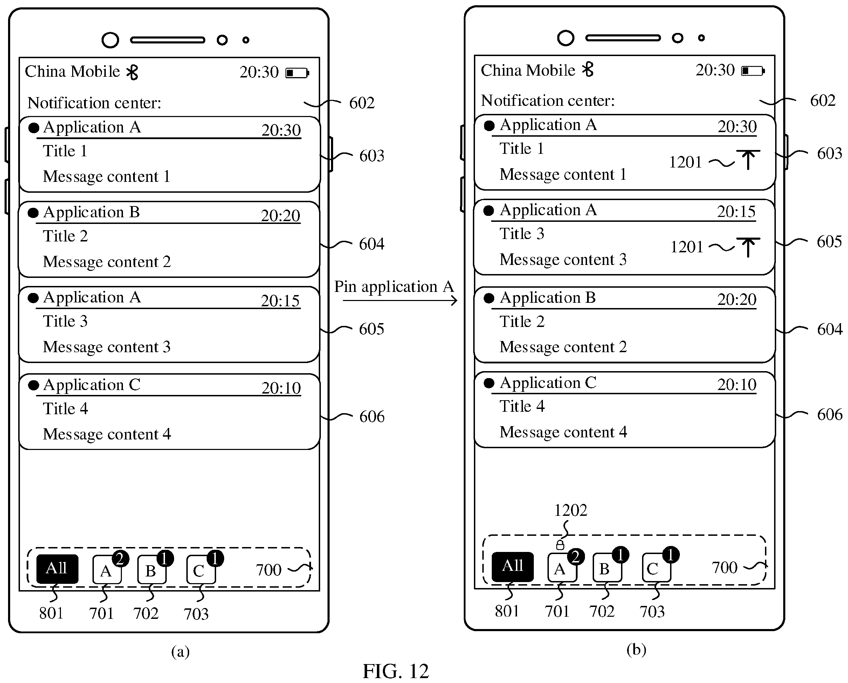

For example, as shown in (a) in FIG. 12, the notification center app displays, in the notification bar 602, the notification messages currently received by all of the applications. If the user wants to display the notification message of the application A on the top in the notification bar 602, the user may input a preset pinning operation for the identifier 701 of the application A in the operation bar 700. For example, if it is detected that the user drags the identifier 701 of the application A in the operation bar 700 to slide downwards, the notification center app may send a third instruction to the notification manager, where the third instruction is used to instruct to display the notification message of the application A on the top in the notification bar 602.

In response to the third instruction, the notification manager may add, in the database 1, a preset status identifier to the notification objects (that is, the notification object 1 and the notification object 3) corresponding to the application A, where the status identifier is used to indicate that the corresponding notification objects are in a pinned state. Further, as shown in Table 3, the notification manager may rearrange notification objects in the database 1 based on the database 1 shown in Table 2, and arrange notification objects in a pinned state at the top of the database 1. Further, the notification manager may indicate the notification center app to draw a corresponding notification message in the notification bar 602 based on each notification object shown in Table 3. Finally, as shown in (b) in FIG. 12, the notification center app may display, on the top of the notification bar 602, the notification message 603 corresponding to the notification object 1 and the notification message 605 corresponding to the notification object 3, so as to display the notification message of the application A on the top of the notification bar 602.

**Table 3**

| Notification object | Application | Receiving time point | Title | Message content | State identifier |
|---|---|---|---|---|---|
| Notification object 1 | Identifier of an application A | Time point 1 | Title 1 | Content 1 | Pinned |
| Notification object 3 | Identifier of the application A | Time point 3 | Title 3 | Content 3 | Pinned |
| Notification object 2 | Identifier of an application B | Time point 2 | Title 2 | Content 2 | |
| Notification object 4 | Identifier of an application C | Time point 4 | Title 4 | Content 4 | |

Still as shown in (b) in FIG. 12, because the notification object 1 and the notification object 3 include a status identifier used to indicate a pinned state, the notification message 603 and the notification message 605 that are drawn by the notification center app based on the notification object 1 and the notification object 3 may include corresponding pinning icons 1201, to notify the user that the notification messages are displayed on the top. In addition, the notification center app may further add a pinning icon 1202 around the identifier 701 of the application A in the operation bar 700, to notify the user that the notification messages of the application A are displayed on the top. The pinning icon 1202 may be the same as or different from the pinning icon 1201.

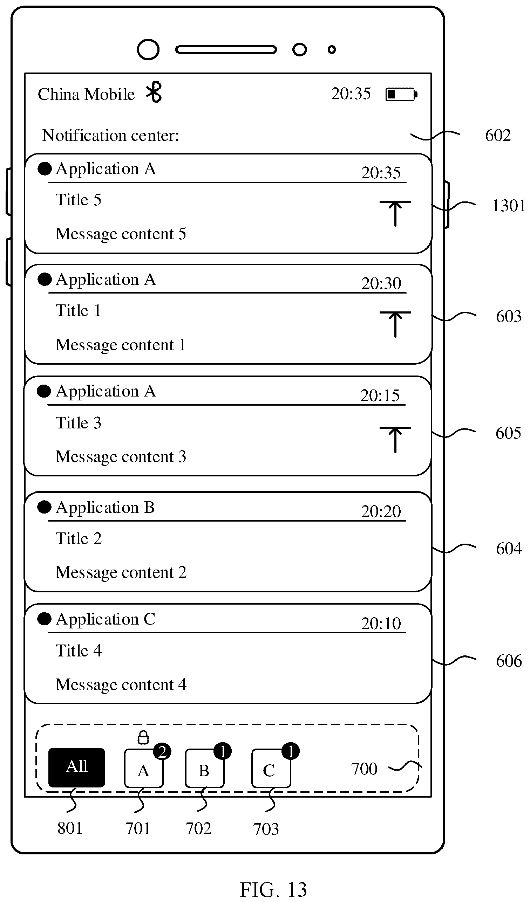

Because the notification message of the application A is displayed on the top, when the notification center app subsequently receives a notification message (for example, a notification message 1301) from the application A again, as shown in FIG. 13, similar to the notification message 603 and the notification message 605 of the application A, the notification center app may also display the notification message 1301 on the top in the notification bar 602.

For example, after receiving the notification message 1301, the application A may send a notification object 5 corresponding to the notification message 1301 to the notification manager. Because the notification object 5 comes from the application A, and the application A is set to a pinned state by the user, the notification manager may add a status identifier indicating the pinned state to the notification object 5, and add the notification object 5 to the top of the database 1 shown in Table 3, to obtain the database shown in Table 4. Further, the notification manager may indicate the notification center app to draw a corresponding notification message in the notification bar 602 based on each notification object shown in Table 4, and finally obtain the notification bar 602 shown in FIG. 13.

**Table 4**

| Notification object | Application | Receiving time point | Title | Message content | State identifier |
|---|---|---|---|---|---|
| Notification object 5 | Identifier of an application A | Time point 5 | Title 5 | Content 5 | Pinned |
| Notification object 1 | Identifier of the application A | Time point 1 | Title 1 | Content 1 | Pinned |
| Notification object 3 | Identifier of the application A | Time point 3 | Title 3 | Content 3 | Pinned |
| Notification object 2 | Identifier of an application B | Time point 2 | Title 2 | Content 2 | |
| Notification object 4 | Identifier of an application C | Time point 4 | Title 4 | Content 4 | |

Correspondingly, if the new notification message received by the notification center app is not from an application that is pinned to the top in the operation bar 700, the notification center app may display the received new notification message after a notification message that is pinned to the top in the notification bar 602.

In other words, the user may select identifiers of one or more applications in the operation bar 700, to trigger the notification center app to display all notification messages of the application on the top in the notification bar 602, so that the user can quickly find a notification message of an application by using an application as a granularity, thereby improving management efficiency and use experience of the user on the notification message in the notification bar 602.

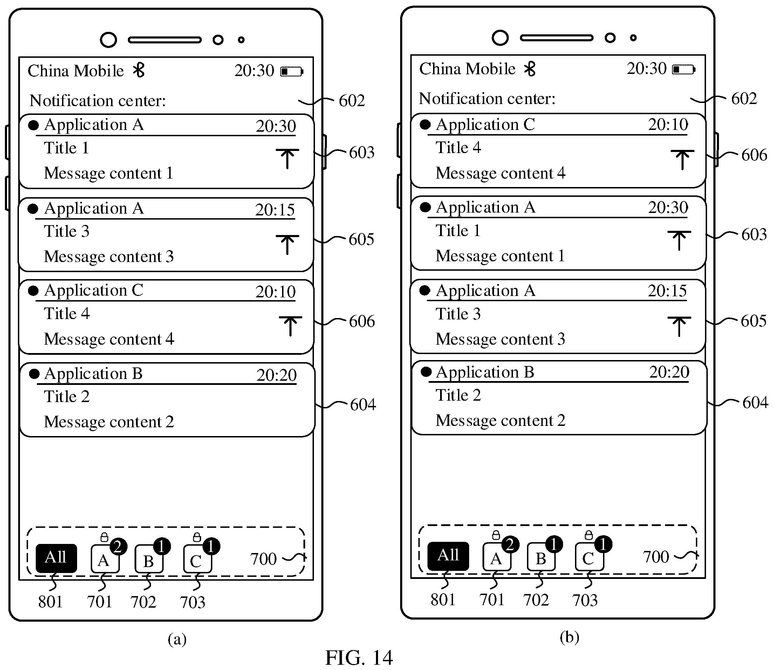

In some embodiments, in addition to displaying a notification message of one application on the top, the notification center app may further display notification messages of a plurality of applications on the top. As shown in (a) in FIG. 14, after the notification center app displays the notification message of the application A on the top in the notification bar 602, if it is detected that the user drags the identifier 703 of the application C in the operation bar 700 to slide downwards, the notification center app may continue to display the notification message of the application C, that is, the notification message 606, on the top in the notification bar 602 according to the foregoing method. When both of the notification messages of the application A and the application C need to be displayed on the top of the notification bar 602, the notification center app may arrange a sequence of the notification messages in the notification bar 602 based on receiving time points of the plurality of notification messages that are pinned to the top. For example, a notification message with a later receiving time point is closer to the top of the notification bar 602.

Alternatively, as shown in (b) in FIG. 14, because the pinning operation last input by the user is input for the application C, the notification center app may preferentially display the notification message of the application C on the top of the notification bar 602. In this case, the notification message of the application A in the notification bar 602 is located after the notification message of the application C. In other words, the notification center app may also arrange, in the notification bar 602 based on a sequence in which the user inputs a pinning operation on different applications, a plurality of notification messages that need to be displayed on the top.

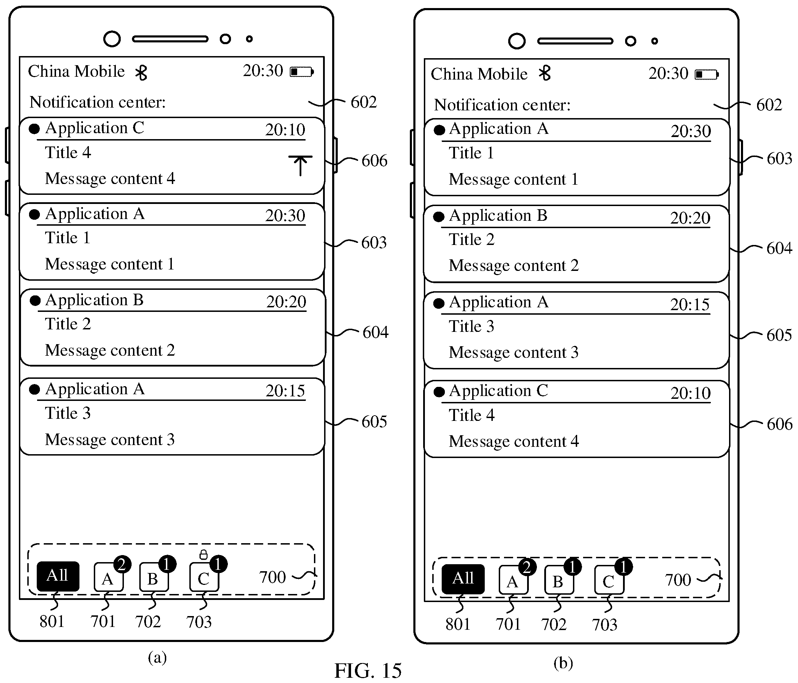

An example in which the notification messages of the application A and the application C in the notification bar 602 are displayed on the top is still used. If it is detected that the user drags the identifier 701 of the application A in the operation bar 700 again to slide downwards, that is, the user inputs a preset unpinning operation, it indicates that the user does not need to display the notification message of the application A on the top in the notification bar 602. In this case, as shown in Table 5, the notification center app may indicate the notification manager to delete the status identifiers indicating the pinned state in the notification object 1 and the notification object 3. In this case, only the notification object 4 of the application C includes a status identifier indicating the pinned state. Further, as shown in (a) in FIG. 15, the notification manager may indicate the notification center app to draw a corresponding notification message in the notification bar 602 based on each notification object shown in Table 5, and finally display only the notification message of the application C on the top in the notification bar 602, and cancel a function of displaying the notification message of the application A on the top.

**Table 5**

| Notification object | Application | Receiving time point | Title | Message content | State identifier |
|---|---|---|---|---|---|
| Notification object 4 | Identifier of an application C | Time point 4 | Title 4 | Content 4 | Pinned |
| Notification object 1 | Identifier of an application A | Time point 1 | Title 1 | Content 1 | |
| Notification object 2 | Identifier of an application B | Time point 2 | Title 2 | Content 2 | |
| Notification object 3 | Identifier of the application A | Time point 3 | Title 3 | Content 3 | |

Similarly, the notification bar 602 shown in (a) in FIG. 15 is used as an example. If it is detected that the user drags the identifier 703 of the application C in the operation bar 700 again to slide downwards, it indicates that the user does not need to display the notification message of the application C on the top in the notification bar 602. In this case, the notification center app may indicate the notification manager to delete the status identifier indicating the pinned state in the notification object 4. In this case, no notification object includes a status identifier indicating the pinned state, and the database 1 is restored to the state shown in Table 2. Further, as shown in (b) in FIG. 15, the notification manager may indicate the notification center app to draw a corresponding notification message in the notification bar 602 based on each notification object shown in Table 2. In this case, pinning functions of the notification messages of the application A and the application C in the notification bar 602 are canceled.

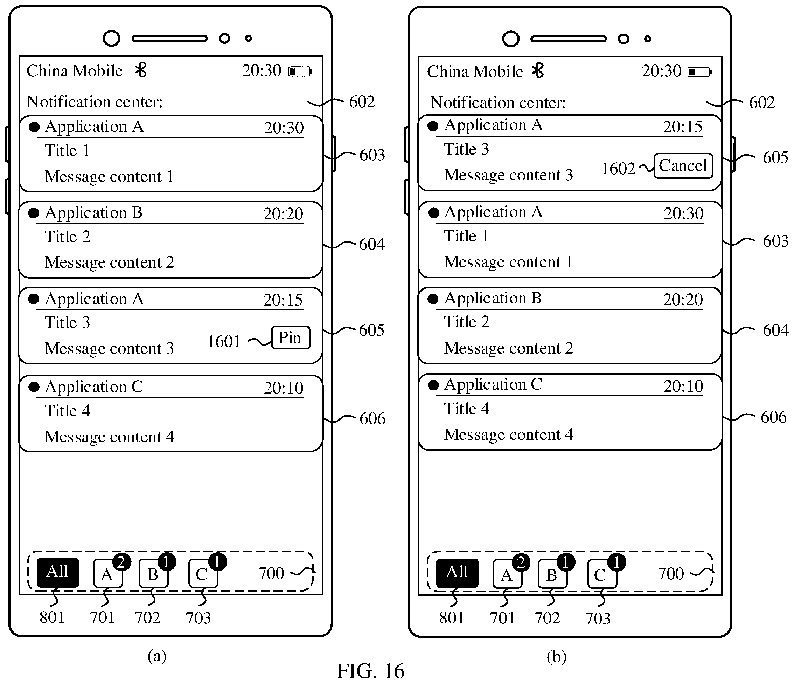

In some embodiments, in addition to displaying notification messages of one or more applications on the top in the notification bar 602 by using an application as a granularity, the notification center app may further display one or more notification messages on the top in the notification bar 602. For example, as shown in (a) in FIG. 16, the notification center app may set a pinning button 1601 in the notification message in the notification bar 602. If it is detected that the user taps the pinning button 1601 in the notification message 605, that is, a pinning function of the notification message 605 is enabled. In this case, as shown in (b) in FIG. 16, the notification center app may display the notification message 605 on the top in the notification bar 602. In this case, another notification message of the application A is not displayed on the top in the notification bar 602. If the notification center app subsequently receives a new notification message from the application A, the notification center app does not display the new notification message on the top in the notification bar 602.

Further, still as shown in (b) in FIG. 16, after the user taps the pinning button 1601 in the notification message 605 and the notification center app is triggered to display the notification message 605 on the top of the notification bar 602, the pinning button 1601 may be updated to a cancel button 1602. If it is detected that the user taps the cancel button 1602 in the notification message 605, the notification center app may restore the notification message 605 to a state before the notification message 605 is displayed on the top in the notification bar 602, that is, the notification message 605 shown in (a) in FIG. 16, so as to cancel the pinning function of the notification message 605 this time.

Alternatively, after the notification center app displays all notification messages of an application on the top in the notification bar 602, the user may cancel a pinning function of one or more notification messages of the notification messages.

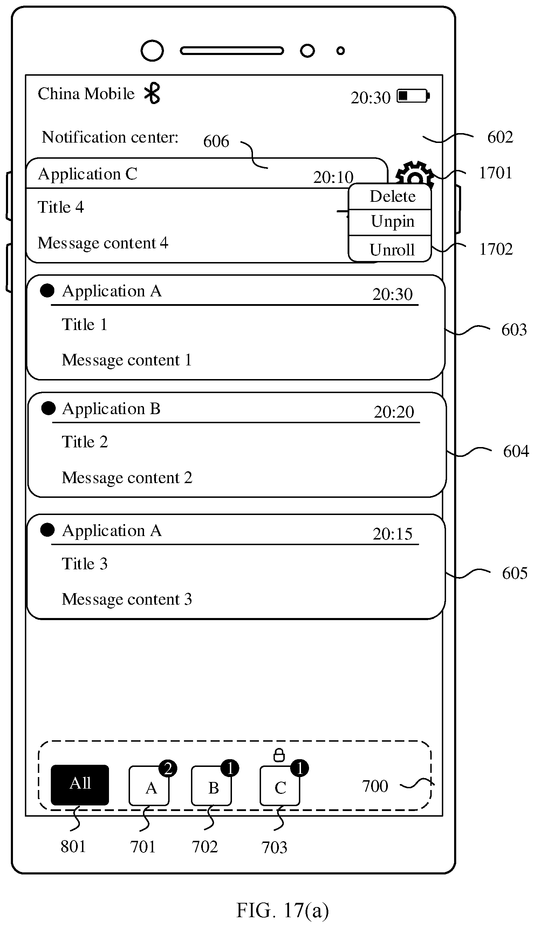

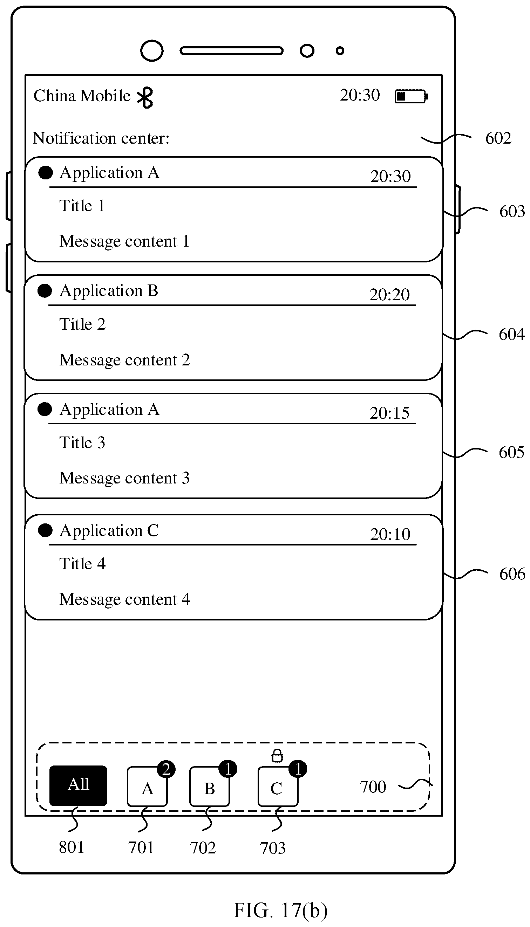

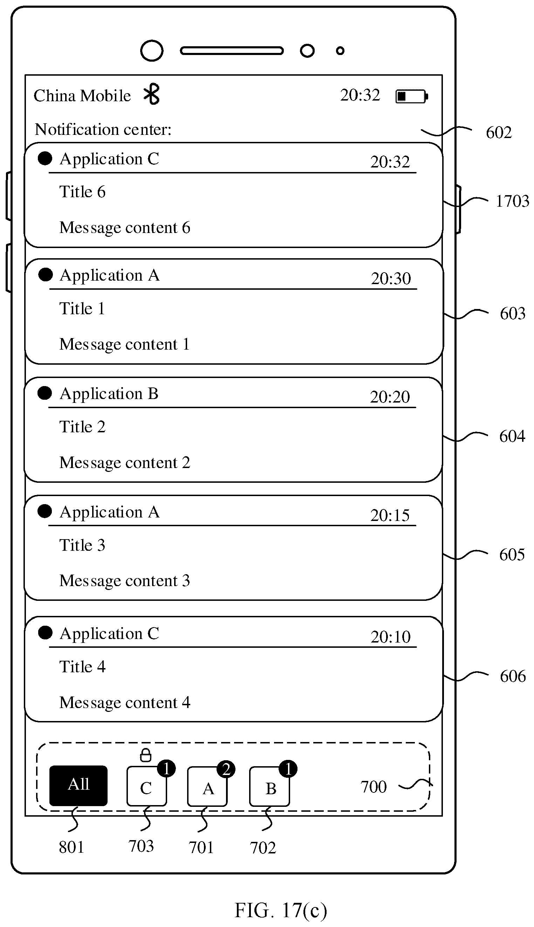

As shown in FIG. 17(a), the user triggers, by operating the identifier of the application C in the operation bar 700, the notification center app to display the notification message 606 of the application C on the top in the notification bar 602. If it is detected that the user slides the notification message 606 leftward, the notification center app may be triggered to display a setting button 1701 of the notification message 606. If it is detected that the user taps the setting button 1701, the notification center app may display a management menu 1702 of the notification message 606. The user may select, on the management menu 1702, to perform an operation such as deleting the notification message 606 or unpinning the notification message 606. If it is detected that the user chooses to unpin the notification message 606 in the management menu 1702, as shown in FIG. 17(b), the notification center app may cancel a pinning function the notification message 606 this time. In this case, although the notification message 606 of the application C is not displayed on the top in the notification bar 602, the application C in the operation bar 700 is still in the pinned state. Subsequently, as shown in FIG. 17(c), if a notification message 1703 of the application C is received, the notification center app may still display the notification message 1703 on the top in the notification bar 602 according to the foregoing method.

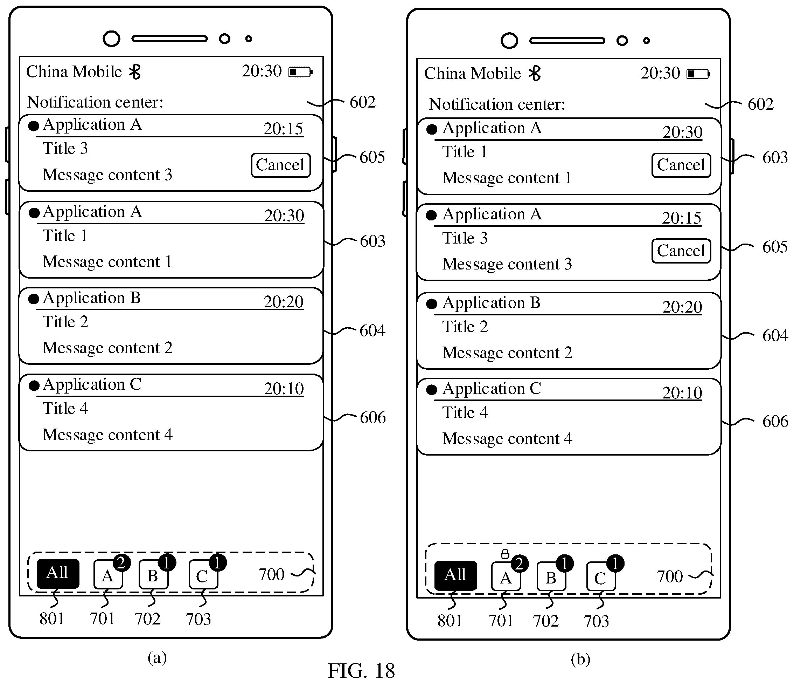

For another example, as shown in (a) in FIG. 18, the user may trigger, by tapping the pinning button 1601 in the notification message 605 of the application A, the notification center app to display the notification message 605 on the top in the notification bar 602. Subsequently, if it is detected that the user inputs a pinning operation on the identifier 701 of the application A in the operation bar 700, as shown in (b) in FIG. 18, the notification center app may still display all of the notification messages (that is, the notification message 603 and the notification message 605) of the application A on the top in the notification bar 602 according to the foregoing method.

In other words, a pinning operation or an unpinning operation performed by the user on a notification message does not affect a pinning function set for another notification message of a corresponding application.

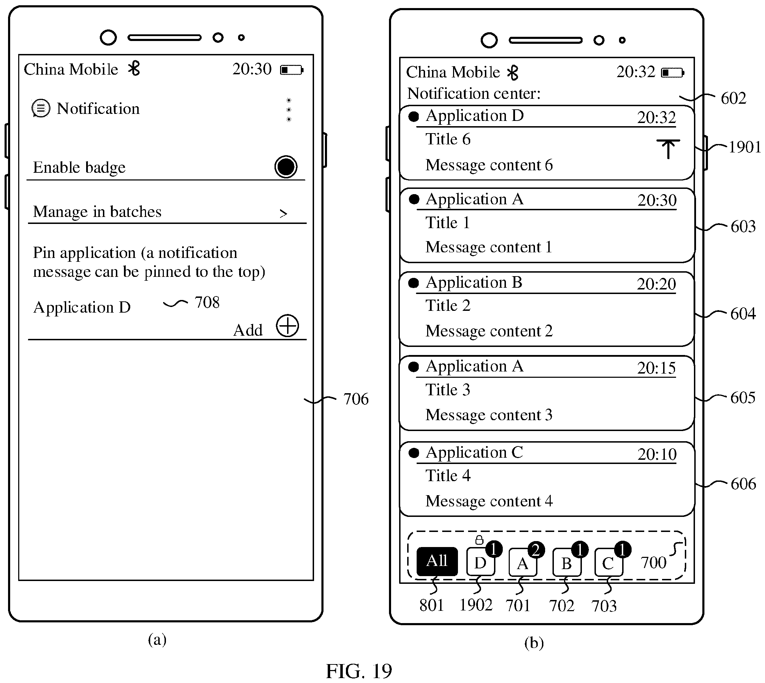

In some embodiments, the user may also preset one or more applications (which may be referred to as a pinned application) that need to display a notification message on the top in the notification bar 602. As shown in (a) in FIG. 19, the user may enter a setting interface 705 of the notification center app in the setting app of the mobile phone. In the setting interface 705, the user may set a pinned application 708 that needs to display a notification message on the top. For example, the pinned application 708 is the application D. After the mobile phone receives a notification message 1901 from the application D, as shown in (b) in FIG. 19, the notification center app may display an identifier 1902 of the application D in the operation bar 700, and a pinning icon may be set near the identifier 1902 of the application D. In addition, the notification center app may display the notification message 1901 on the top in the notification bar 602. In other words, before the notification message of the application D is received, the user may preset that the notification message of the application D is displayed on the top in the notification bar 602. In this way, after receiving the notification message of the application D, the mobile phone may directly display the notification message of the application D on the top in the notification bar 602.

In some embodiments, the user may further trigger, by operating identifiers of one or more applications in the operation bar 700, the notification center app to delete, from the notification bar 602, notification messages of the corresponding one or more applications.

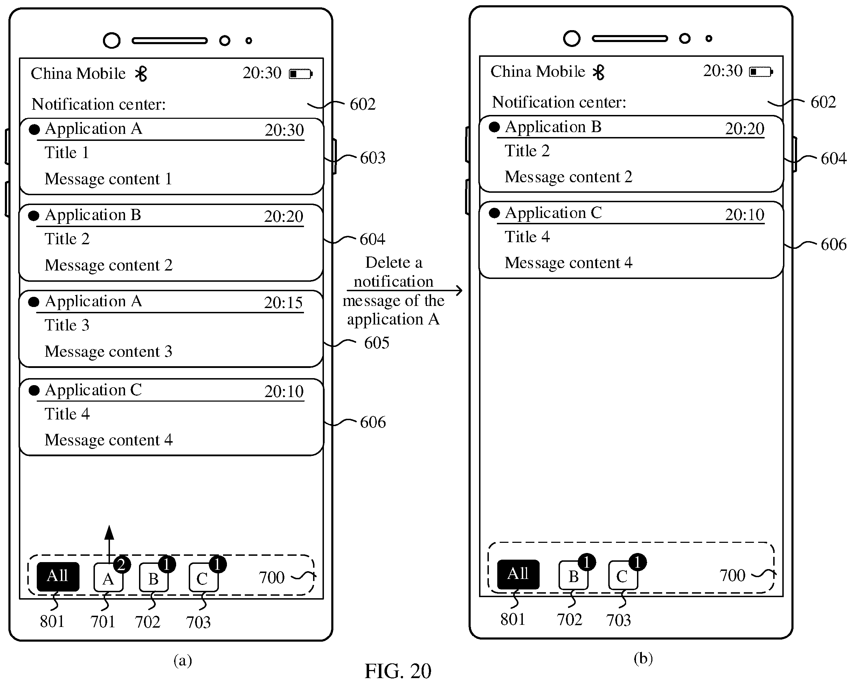

For example, as shown in (a) in FIG. 20, the notification center app displays, in the notification bar 602, the notification messages currently received by all of the applications. If the user needs to delete all of the notification messages of the application A, the user may input a preset deletion operation on the identifier 701 of the application A in the operation bar 700. For example, if it is detected that the user drags the identifier 701 of the application A in the operation bar 700 to slide upwards, the notification center app may send a fourth instruction to the notification manager, where the fourth instruction is used to instruct to delete all of the notification messages of the applications A from the notification bar 602.

In response to the fourth instruction, the notification manager may delete all of the notification objects of the applications A from the database 1 shown in Table 2. In this case, as shown in Table 6, an updated database 1 includes only the notification objects of the application B and the application C. Further, the notification manager may indicate the notification center app to draw corresponding notification messages in the notification bar 602 based on each notification object shown in Table 6. Finally, as shown in (b) in FIG. 20, the notification message displayed by the notification center app in the notification bar 602 no longer includes the notification message of the application A, and the operation bar 700 no longer includes the identifier 701 of the application A.

**Table 6**

| Notification object | Application | Receiving time point | Title | Message content |
|---|---|---|---|---|
| Notification object 3 | Identifier of an application A | Time point 3 | Title 3 | Content 3 |
| Notification object 4 | Identifier of an application C | Time point 4 | Title 4 | Content 4 |

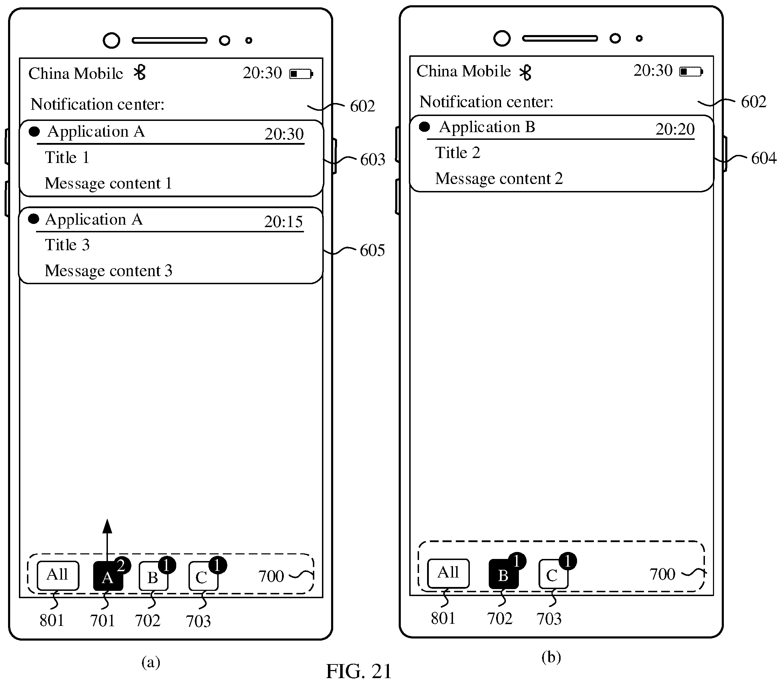

For another example, as shown in (a) in FIG. 21, after the user selects the identifier 701 of the application A in the operation bar 700, the notification center app may display all of the notification messages of the application A in the notification bar 602. In this case, if it is detected that the user drags the identifier 701 of the application A in the operation bar 700 to slide upwards, in addition to deleting all of the notification messages of the application A according to the foregoing method, as shown in (b) in FIG. 21, the notification center app may further automatically mark an application (namely, the application B) next to the application A in the operation bar 700 as a selected state, and display all of the notification messages of the application B in the notification bar 602.

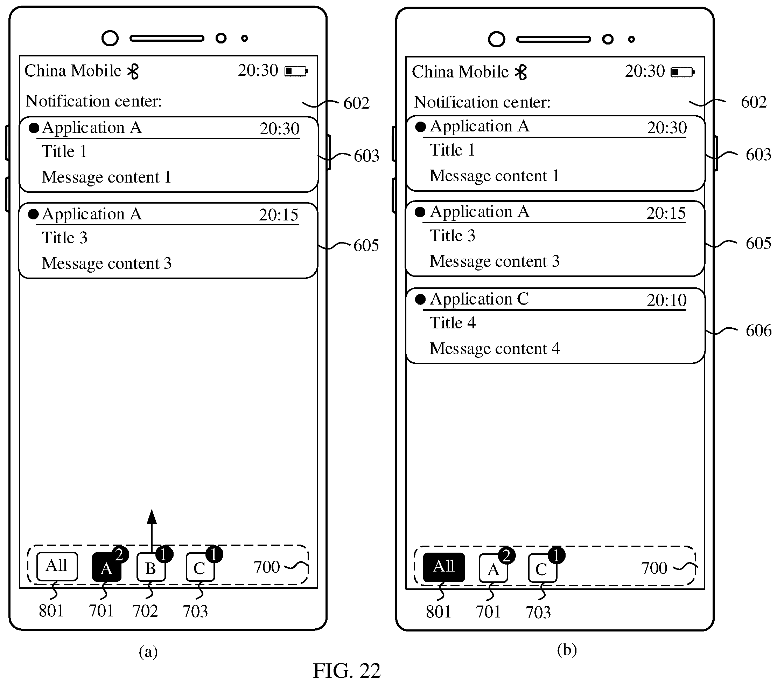

For another example, as shown in (a) in FIG. 22, after the user selects the identifier 701 of the application A in the operation bar 700, the notification center app may display all of the notification messages of the application A in the notification bar 602. In this case, if it is detected that the user drags the identifier 702 of the application B in the operation bar 700 to slide upwards, the notification center app may delete all of the notification messages of the application B according to the foregoing method. However, in this case, all of the notification messages of the application A are still displayed in the notification bar 602. When it is detected that the user taps the button 801 used to display all notification messages, as shown in (b) in FIG. 22, the notification center app may display, in the notification bar 602, another notification message remaining after all of the notification messages of the application B are deleted.

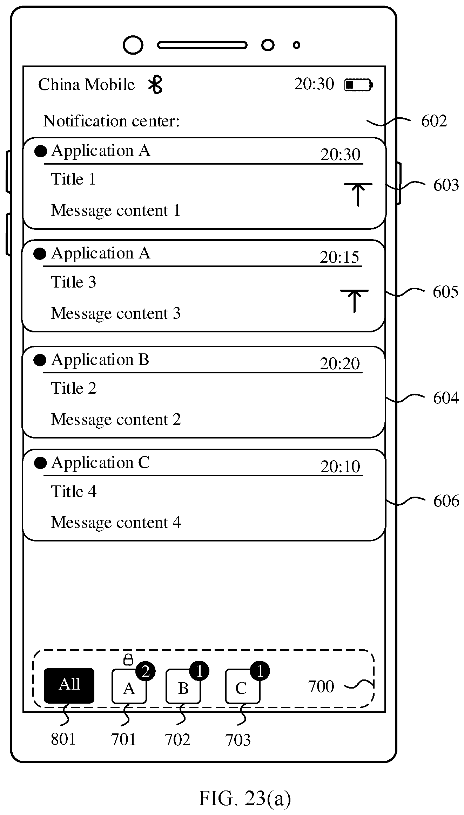

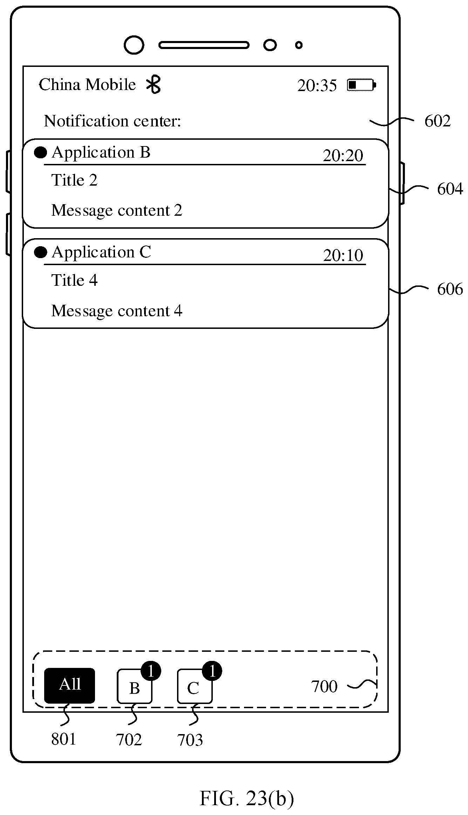

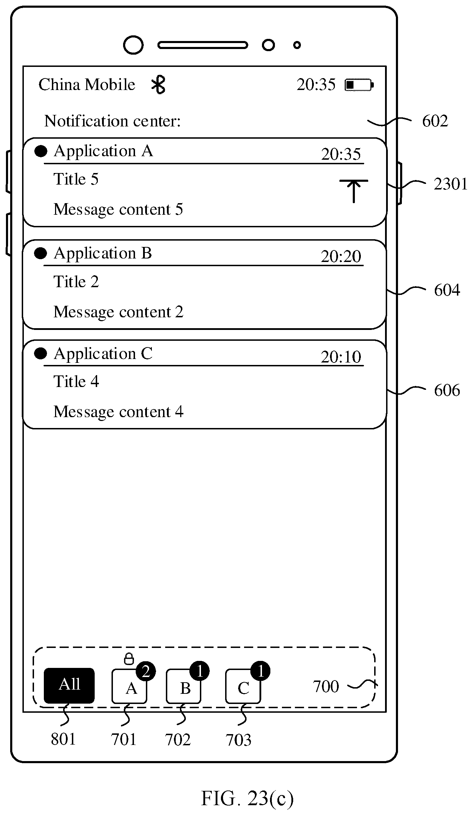

Alternatively, as shown in FIG. 23(a), after the user inputs a pinning operation for the identifier 701 of the application A in the operation bar 700, the notification center app may display all of the notification messages of the application A on the top in the notification bar 602. In this case, if it is detected that the user drags the identifier 701 of the application A in the operation bar 700 to slide upwards, as shown in FIG. 23(b), the notification center app may delete all of the notification messages of the application A according to the foregoing method in the notification bar 602. In this case, although all of the notification messages of the application A are deleted, a pin-to top function of the application A is not canceled. In this case, if a new notification message, for example, a notification message 2301, from the application A is subsequently received, as shown in FIG. 23(c), the notification center app may display the notification message 2301 on the top in the notification bar 602.

In this way, by selecting the identifier 701 of the application A in the operation bar 700, the user may delete notification messages of one or more applications in the notification bar 602 in batches, so that the user manages the notification messages in the notification bar 602 by using an application as a granularity, thereby improving user experience.

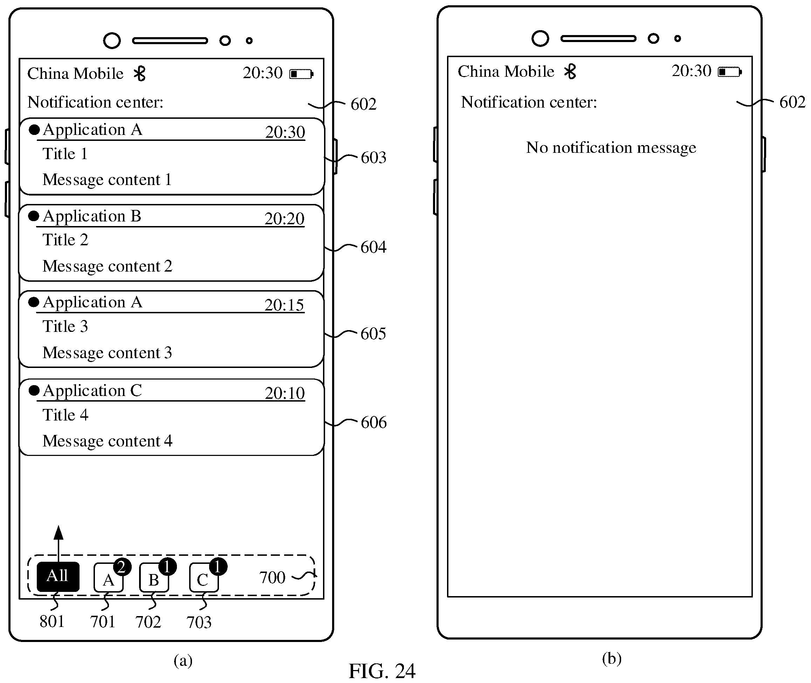

In some embodiments, as shown in (a) in FIG. 24, the user may further input a preset deletion operation on the button 801 that is in the operation bar 700 and that is used to display all notification messages. For example, if it is detected that the user drags the button 801 to slide upwards, as shown in (b) in FIG. 24, the notification center app may delete all of the current notification messages of the applications, that is, clear the notification bar 602.

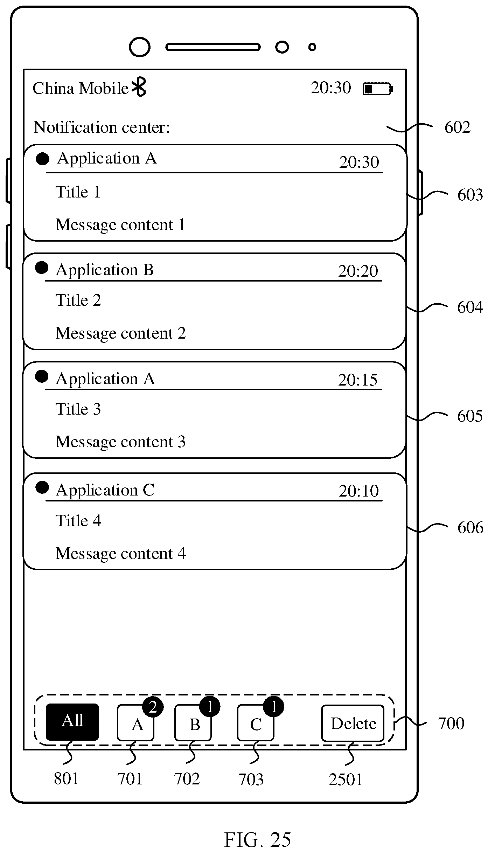

Alternatively, as shown in FIG. 25, the notification center app may further set a delete button 2501 in the operation bar 700. If it is detected that the user taps the delete button 2501, as shown in (b) in FIG. 24, the notification center app may delete all of the current notification messages of the applications, that is, clear the notification bar 602.

Alternatively, still as shown in FIG. 25, the notification center app may further set the deletion operation to an operation of dragging an identifier of an application in the operation bar 700 to the delete button 2501. In this case, if it is detected that the user drags the identifier 701 of the application A in the operation bar 700 to a location of the delete button 2501, the notification center app may delete all of the notification messages of the application A according to the foregoing method. Alternatively, if it is detected that the user drags the button 801 in the operation bar 700 to a location of the delete button 2501, the notification center app may delete all of the current notification messages of the applications according to the foregoing method, that is, clear the notification bar 602.

It can be learned that, according to the notification message management method provided in this embodiment of this application, an identifier of an application that currently has a notification message may be displayed in the operation bar. The user may quickly and conveniently filter, pin, or delete, by using an application as a granularity, notification messages of one or more applications by operating the identifier of the application in the operation bar, so that the user does not need to search for each notification message in the notification bar and manage the notification message, thereby improving management efficiency and use experience of the user on the notification message in the notification bar.

An embodiment of this application discloses an electronic device, including a processor, and a memory, an input device, and an output device that are connected to the processor. The input device and the output device may be integrated into one device. For example, a touch sensor may serve as the input device, a display may serve as the output device, and the touch sensor and the display may be integrated to form a touchscreen.

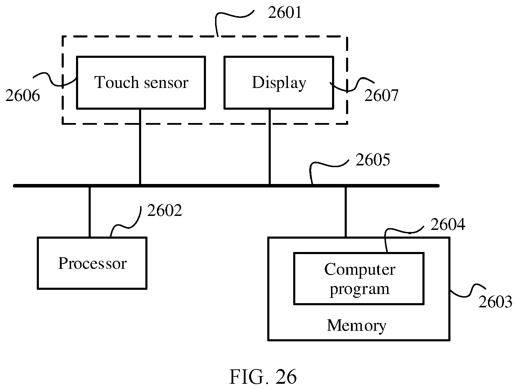

In this case, as shown in FIG. 26, the electronic device may include a touchscreen 2601, where the touchscreen 2601 includes a touch sensor 2606 and a display 2607, one or more processors 2602, a memory 2603, one or more applications (not shown), and one or more computer programs 2604. The foregoing components may be connected by using one or more communication buses 2605. The one or more computer programs 2604 are stored in the memory 2603 and are configured to be executed by the one or more processors 2602. The one or more computer programs 2604 include an instruction, and the instruction may be used to perform the steps in the foregoing embodiments. All related content of the steps in the foregoing method embodiments may be cited in function descriptions of corresponding physical components. Details are not described herein again.

For example, the processor 2602 may be specifically the processor 110 shown in FIG. 2, the memory 2603 may be specifically the internal memory 121 shown in FIG. 2, the display 2607 may be specifically the display 194 shown in FIG. 2, and the touch sensor 2606 may be specifically the touch sensor in the sensor module 180 shown in FIG. 2. This is not limited in this embodiment of this application.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

Functional units in embodiments of this application may be integrated into one processing unit, or each of the units may exist alone physically, or two or more units are integrated into one unit. The foregoing integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A notification message management method, comprising:
displaying, by an electronic device, a notification interface, wherein the notification interface comprises N notification messages of M applications, M is an integer greater than or equal to 1, and N is an integer greater than 1, wherein
the notification interface further comprises an operation bar, and identifiers of the M applications are displayed in the operation bar.

2. The method according to claim 1, wherein the identifiers of the M applications comprise an identifier of a first application, and after the displaying, by an electronic device, a notification interface, the method further comprises:
receiving, by the electronic device, a first filtering operation input by a user for the identifier of the first application; and
in response to the first filtering operation, displaying, by the electronic device in the notification interface, a notification message of the first application in the N notification messages.

3. The method according to claim 2, wherein after the receiving, by the electronic device, a first filtering operation input by a user for the identifier of the first application, the method further comprises:
marking, by the electronic device in response to the first filtering operation, the identifier of the first application in the operation bar as a selected state.

4. The method according to claim 2 or 3, wherein the identifiers of the M applications further comprise an identifier of a second application, and after the displaying, by the electronic device in the notification interface, a notification message of the first application in the N notification messages, the method further comprises:
receiving, by the electronic device, a second filtering operation input by the user for the identifier of the second application; and
in response to the second filtering operation, displaying, by the electronic device in the notification interface, a notification message of the second application in the N notification messages.

5. The method according to claim 4, wherein after the displaying, by the electronic device in the notification interface, a notification message of the second application in the N notification messages, the method further comprises:
receiving, by the electronic device, a first filtering cancellation operation input by the user for the identifier of the second application; and
displaying, by the electronic device, the N notification messages in the notification interface in response to the first filtering cancellation operation.

6. The method according to claim 2 or 3, wherein the identifiers of the M applications further comprise an identifier of a second application, and after the displaying, by the electronic device in the notification interface, a notification message of the first application in the N notification messages, the method further comprises:
receiving, by the electronic device, a second filtering operation input by the user for the identifier of the second application; and
in response to the second filtering operation, displaying, by the electronic device in the notification interface, the notification message of the first application and a notification message of the second application in the N notification messages.

7. The method according to claim 6, wherein after the displaying, by the electronic device in the notification interface, the notification message of the first application and a notification message of the second application in the N notification messages, the method further comprises:
receiving, by the electronic device, a first filtering cancellation operation input by the user for the identifier of the second application; and
in response to the first filtering cancellation operation, displaying, by the electronic device in the notification interface, the notification message of the first application in the N notification messages.

8. The method according to claim 7, wherein after the displaying, by the electronic device in the notification interface, the notification message of the first application in the N notification messages, the method further comprises:
receiving, by the electronic device, a second filtering cancellation operation input by the user for the identifier of the first application; and
displaying, by the electronic device, the N notification messages in the notification interface in response to the second filtering cancellation operation.

9. The method according to claim 1, wherein the identifiers of the M applications comprise an identifier of a first application, and after the displaying, by an electronic device, a notification interface, the method further comprises:
receiving, by the electronic device, a first pinning operation input by a user for the identifier of the first application; and
in response to the first pinning operation, displaying, by the electronic device, a notification message of the first application in the N notification messages on the top in the notification interface.

10. The method according to claim 9, wherein after the receiving, by the electronic device, a first pinning operation input by a user for the identifier of the first application, the method further comprises:
displaying, by the electronic device in response to the first pinning operation, a pinning icon around the identifier of the first application.

11. The method according to claim 9 or 10, wherein after the receiving, by the electronic device, a first pinning operation input by a user for the identifier of the first application, the method further comprises:
obtaining, by the electronic device, a first notification message; and
when the first notification message is the notification message of the first application, displaying, by the electronic device, the first notification message on the top in the notification interface; or
when the first notification message is a notification message of another application other than the first application, displaying, by the electronic device in the notification interface, the first notification message after the notification message of the first application.

12. The method according to any one of claims 9 to 11, wherein the identifiers of the M applications further comprise an identifier of a second application, and after the displaying, by the electronic device, a notification message of the first application in the N notification messages on the top in the notification interface, the method further comprises:
receiving, by the electronic device, a second pinning operation input by the user for the identifier of the second application; and
displaying, by the electronic device in response to the second pinning operation, a notification message of the second application in the N notification messages on the top in the notification interface; or
displaying, by the electronic device in response to the second pinning operation, the notification message of the first application and a notification message of the second application in the N notification messages on the top in the notification interface.

13. The method according to any one of claims 9 to 12, wherein after the displaying, by the electronic device, a notification message of the first application in the N notification messages on the top in the notification interface, the method further comprises:
receiving, by the electronic device, an unpinning operation input by the user for the identifier of the first application; and
in response to the unpinning operation, restoring, by the electronic device, a display location of the notification message of the first application in the notification interface.

14. The method according to any one of claims 9 to 12, wherein after the displaying, by the electronic device, a notification message of the first application in the N notification messages on the top in the notification interface, the method further comprises:
receiving, by the electronic device, an unpinning operation input by the user for a second notification message, wherein the second notification message is the notification message of the first application that is displayed on the top; and
in response to the unpinning operation, restoring, by the electronic device, a display location of the second notification message in the notification interface.

15. The method according to any one of claims 1 to 14, wherein the method further comprises:
when the electronic device does not obtain a notification message of a third application, setting, by the electronic device, the third application as a pinned application; and
after the displaying, by an electronic device, a notification interface, the method further comprises:
obtaining, by the electronic device, the notification message of the third application; and
displaying, by the electronic device, the notification message of the third application on the top in the notification interface, and displaying an identifier of the third application in the operation bar.

16. The method according to any one of claims 1 to 15, wherein the identifiers of the M applications comprise the identifier of the first application, and after the displaying, by an electronic device, a notification interface, the method further comprises:
receiving, by the electronic device, a deletion operation input by the user for the identifier of the first application; and
deleting, by the electronic device in response to the deletion operation, the notification message of the first application in the notification interface.

17. The method according to any one of claims 1 to 16, wherein the operation bar further comprises a first button, and the method further comprises:
displaying, by the electronic device, the N notification messages in the notification interface in response to a first operation input by the user for the first button.

18. The method according to any one of claims 1 to 16, wherein the operation bar further comprises a second button, and the method further comprises:
deleting, by the electronic device, the N notification messages in the notification interface in response to a second operation input by the user for the second button.

19. The method according to any one of claims 1 to 18, wherein badges are set on the identifiers of the M applications, and the badges are used to indicate quantities of notification messages of the applications.

20. An electronic device, wherein the electronic device comprises:
a touchscreen, wherein the touchscreen comprises a touch sensor and a display;
one or more processors;
a memory; and
a communication module, wherein
the memory stores one or more computer programs, the one or more computer programs comprise instructions, and when the instructions are executed by the electronic device, the electronic device is enabled to perform the notification message management method according to any one of claims 1 to 19.

21. A computer-readable storage medium, wherein the computer-readable storage medium stores instructions, and when the instructions are run on an electronic device, the electronic device is enabled to perform the notification message management method according to any one of claims 1 to 19.

22. A computer program product comprising instructions, wherein when the computer program product runs on an electronic device, the electronic device is enabled to perform the notification message management method according to any one of claims 1 to 19.
